(19) Europäisches Patentamt
European Patent Office
Office européen des brevets

(11) **EP 4 050 319 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **21159363.7**

(22) Anmeldetag: **25.02.2021**

(51) Internationale Patentklassifikation (IPC):
**G01N 1/22** (2006.01) **G01N 15/02** (2024.01)

(52) Gemeinsame Patentklassifikation (CPC):
**G01N 1/2247;** G01N 2001/225; G01N 2015/0261

(54) **VORRICHTUNG UND VERFAHREN ZUR ISOKINETISCHEN ENTNAHME EINER PROBE AUS EINEM STRÖMENDEN AEROSOL**

DEVICE AND METHOD FOR ISOKINETIC EXTRACTION OF A SAMPLE FROM A FLOWING AEROSOL

DISPOSITIF ET PROCÉDÉ DE PRÉLÈVEMENT ISOCINÉTIQUE D'UN ÉCHANTILLON À PARTIR D'UN AÉROSOL EN ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.08.2022 Patentblatt 2022/35**

(73) Patentinhaber: **Al Shabu, Atef**
**96274 Itzgrund (DE)**

(72) Erfinder: **Al Shabu, Atef**
**96274 Itzgrund (DE)**

(74) Vertreter: **Dr. Gassner & Partner mbB**
**Wetterkreuz 3**
**91058 Erlangen (DE)**

(56) Entgegenhaltungen:
DE-A1- 3 318 339        US-A- 4 159 635
US-A1- 2005 087 028     US-B2- 6 904 815

EP 4 050 319 B1

**Beschreibung**

Die Erfindung betrifft eine Vorrichtung und ein Verfahren zur isokinetischen Entnahme einer Probe aus einem strömenden Aerosol sowie eine Verwendung der Vorrichtung. Unter einem Aerosol wird dabei ein heterogenes Gemisch aus Partikeln und einem Gas verstanden, wobei die Partikel in dem Gas schweben. Die Partikel können dabei fest oder flüssig sein. Die Partikel können radioaktive Stoffe umfassen oder aus radioaktiven Stoffen bestehen. Bei dem Aerosol kann es sich beispielsweise um Abluft aus einer kerntechnischen Anlage handeln.

Die Vorrichtung umfasst einen Probensammler mit einem Ansaugstück, welches eine Einlassöffnung aufweist und die Einlassöffnung gasleitend mit dem Probensammler verbindet. Weiterhin umfasst die Vorrichtung eine mit dem Probensammler und über den Probensammler und das Ansaugstück mit der Einlassöffnung gasleitend verbundene Vakuumpumpe sowie einen Strömungssensor zur Erfassung der Strömungsgeschwindigkeit des strömenden Aerosols. Außerdem umfasst die Vorrichtung einen Durchflussmesser zur Erfassung der Strömungsgeschwindigkeit in der Vorrichtung und eine Regeleinheit zur isokinetischen Regelung eines Aerosoldurchflusses durch die Einlassöffnung in Abhängigkeit der vom Strömungssensor und vom Durchflussmesser jeweils erfassten und an die Regeleinheit übermittelten Strömungsgeschwindigkeit.

Die Regelung kann dadurch erfolgen, dass von der Regeleinheit der Volumenstrom an der Einlassöffnung mit dem Volumenstrom an der Position des Durchflussmessers innerhalb der Vorrichtung verglichen wird. Die Regeleinheit steuert dann ein Steuerelement so, dass der Aerosoldurchfluss erhöht wird, wenn der Volumenstrom an der Position des Durchflussmessers geringer ist als der Volumenstrom an der Einlassöffnung und der Aerosoldurchfluss verringert wird, wenn der Volumenstrom an der Position des Durchflussmessers höher ist als der Volumenstrom an der Einlassöffnung. Der durch die Regeleinheit angestrebte Sollzustand ist also ein Zustand bei dem der Volumenstrom an der Position des Durchflussmessers der gleiche ist wie der Volumenstrom an der Einlassöffnung. Der Volumenstrom ist dabei das Produkt aus der Strömungsgeschwindigkeit und der Querschnittsfläche der Einlassöffnung oder eines Strömungskanals innerhalb der Vorrichtung an der Stelle des Durchflussmessers. Bei dem Steuerelement kann es sich beispielsweise um ein in Strömungsrichtung nach dem Probensammler und nach dem Durchflussmesser angeordnetes Nebenstromventil oder ein elektrisches oder elektronisches Bauteil zur Steuerung der Leistung der Vakuumpumpe handeln. Durch das Öffnen des Nebenstromventils kann beispielsweise Luft einströmen und eine Verringerung des Unterdrucks und damit der Strömungsgeschwindigkeit an der Einlassöffnung bewirkt werden. Umgekehrt kann durch das Schließen des Nebenstromventils eine Erhöhung des Unterdrucks und damit der Strömungsgeschwindigkeit an der Einlassöffnung bewirkt werden.

In kerntechnischen Anlagen sind Probeentnahmesysteme in Ab- und Fortluftkanälen bekannt. Die Probeentnahmesysteme ermöglichen über Schwebstofffilter eine kontinuierliche Sammlung von an Schwebstoffpartikel gebundenen radioaktiven Stoffen. Die Schwebstoffpartikel weisen dabei üblicherweise einen aerodynamischen Äquivalentdurchmesser im Bereich von 0,1 $\mu$m bis 20 $\mu$m auf. Um dabei eine für die Ab- oder Fortluft repräsentative Probe zu erhalten, erfolgt die Probeentnahme punktuell über Probeentnahmedüsen an festgelegten Stellen und über lange Probeentnahmeleitungen. Weiterhin ist es bekannt, dass die Probeentnahme isokinetisch, d. h. mit derjenigen Strömungsgeschwindigkeit und in derjenigen Strömungsrichtung, die jeweils auch im Ab- oder Fortluftkanal an der Entnahmestelle vorherrscht, erfolgen sollte, um repräsentativ zu sein.

Bei einer isokinetischen Probeentnahme hat das Verhältnis der Entnahmegeschwindigkeit zur Hauptströmungsgeschwindigkeit im Ab- oder Fortluftkanal am Entnahmeort den Wert 1. Dabei muss der Anströmwinkel, d.h. der Winkel mit dem die Entnahmeöffnung angeströmt wird, null betragen. Bei Abweichungen von diesen Werten ist die Probeentnahme in der Regel anisokinetisch. Eine anisokinetische Probeentnahme führt zur Verfälschung der Partikelkonzentrationen in der Probe und somit zur Verfälschung der Messergebnisse. Wie groß der Fehler aufgrund anisokinetischer Probeentnahme ist, hängt sowohl von den Abweichungen von den isokinetischen Bedingungen als auch von der Partikelgröße ab. Im Wesentlichen sind Partikel, die einen Äquivalentdurchmesser von 1 $\mu$m aufweisen oder größer als 1 $\mu$m sind auf Grund ihrer Trägheit stärker betroffen als Partikel, die kleiner als 1 $\mu$m sind. Im Allgemeinen ist die Partikelkonzentration in der entnommenen Probe bei überisokinetischer Probeentnahme, d. h. wenn die Entnahmegeschwindigkeit größer als die Hauptströmungsgeschwindigkeit im Ab- oder Fortluftkanal ist, kleiner als bei isokinetischer Entnahme, da größere Partikel aufgrund ihrer Trägheit den sich ergebenden Stromlinienkrümmungen nicht folgen können. Bei unterisokinetischer Probeentnahme ist die Partikelkonzentration in der entnommenen Probe üblicherweise größer als bei isokinetischer Entnahme, da auch Partikel außerhalb der der Entnahmeöffnung entsprechenden Fläche angesaugt werden. Um derartige Abweichungen der Entnahmegeschwindigkeit von der Hauptströmungsgeschwindigkeit im Ab- oder Fortluftkanal zu vermeiden, ist es daher üblich, die Absauggeschwindigkeit entsprechend zu korrigieren. Ein von null abweichender Anströmwinkel verursacht ebenfalls eine Verfälschung der Messergebnisse, deren Korrektur jedoch üblicherweise nicht erfolgt.

Aus Durham M.: Isokinetic sampling of aerosols from tangential flow streams, Dissertation an der University of Florida, 1978 sind theoretische Ansätze zur Korrektur von Fehlern auf Grund anisokinetischer Probeentnahme bekannt. Die Probeentnahme war dabei anisokinetisch, weil die Strömungsgeschwindigkeit und/oder die Richtung der Absaugung von der im Ab- oder Fortluftkanal an der Entnahmestelle vorherrschenden Strömungsgeschwindigkeit und Strömungsrichtung abgewichen ist.

Die Strömungsvorgänge und somit auch die Verteilung der Partikelkonzentrationen bei anisokinetischer Probenentnahme unterliegen einer komplexen Physik. Eine theoretische Beschreibung der Strömungseffekte ist auf Grund ihres instationären Charakters schwer und für eine praktische Anwendung wenig geeignet.

Zur Vermeidung der Notwendigkeit der Berücksichtigung einer Abweichung der Strömungsrichtung von der an der Entnahmestelle vorherrschenden Strömungsrichtung stellen internationale Standards, wie der internationale Standard ISO 2889, zweite Auflage vom 15. März 2010, hohe Anforderungen an den Entnahmeort. Demnach sind u. a. Entnahmeorte, an denen der Anströmwinkel 20° überschreitet, unzulässig. Abweichungen bei der Entnahmegeschwindigkeit von bis zu 20% lassen die Standards aus Machbarkeitsgründen hingegen zu. Dadurch sind die Anforderungen an den Ort der Entnahme so hoch, dass nur bestimmte Orte für den Einbau einer Probeentnahmedüse innerhalb des Ab- oder Fortluftkanals in Frage kommen. Beispielsweise kommt eine Entnahme im Bereich einer starken Krümmung des Ab- oder Fortluftkanals oder nahe einer Wandung des Ab- oder Fortluftkanals auf Grund dort entstehender Verwirbelungen nicht in Frage.

Aus der DE 3 318 339 A1 sind ein Verfahren und eine Vorrichtung zur Probennahme von in einer Fluidströmung mitgeführten festen und/oder in Flüssigkeit gelösten Inhaltsstoffen bekannt. Bei dem Verfahren wird ein Filter zur Ablagerung der Inhaltsstoffe mittels einer Heizvorrichtung, insbesondere durch Wärmestrahlung beheizt.

Aus der US 4,159,635 ist ein isokinetischer Luftprobennehmer bekannt, der einen Filter, einen Halter für den Filter, eine Luftpumpe zum Ansaugen von Luft durch den Filter, eine Einlassanordnung für den Probennehmer, einen Verschluss für die Einlassöffnung und Mittel zum gleichzeitigen Öffnen des Verschlusses und Einschalten der Luftpumpe, wenn die Windgeschwindigkeit derart ist, dass eine isokinetische Luftprobenahme erhalten wird, umfasst. Die Einlassanordnung weist eine Einlassöffnung von einer solchen Größe auf, dass eine isokinetische Luftprobenahme bei einer bestimmten Windgeschwindigkeit erreicht wird.

Aus der US 000000001757 H1 ist ein Verfahren zur automatisierten isokinetischen Probeentnahme aus Rauchgasen eines stationären Brenners zur kontinuierlichen Überwachung von Metallemissionen bekannt. Die Probenluft wird hierbei mittels einer beheizten Sonde extrahiert. In Abhängigkeit von Ergebnissen der Messung von Temperatur, absolutem Druck und Differenzdruck der Rauchgase kann die Durchflussgeschwindigkeit der Probenluft gesteuert werden, um eine isokinetische Extraktion zu gewährleisten.

Aus der EP 0 561 557 B1 ist eine Vorrichtung zur Probenahme aus einem von einer Abgasquelle entweichenden Abgas bekannt. Die Vorrichtung umfasst einen Abgaseinlass, der an die Abgasquelle angeschlossen werden kann, einen Strömungsbegrenzungsweg für das von der Abgasquelle entweichende Abgas, eine Strömungserzeugungsvorrichtung, die mit dem Strömungsbegrenzungsweg gekoppelt ist, um eine Strömung des Abgases in dem Strömungsbegrenzungsweg zu erzeugen, eine Einrichtung zur Messung der Strömungsgeschwindigkeit des Abgases mit einer ersten subsonischen Venturi-Drosselung, eine Einrichtung zur Messung der Strömungsgeschwindigkeit einer entnommenen Abgasprobe mit einer zweiten subsonischen Venturi-Drosselung, eine erste Durchflussregulierungseinrichtung zur Regulierung der Strömungsgeschwindigkeit des Abgases durch die erste subsonische Venturi-Drosselung, eine zweite Durchflussregulierungseinrichtung zur Regulierung der Strömungsgeschwindigkeit der entnommenen Probe durch die zweite subsonische Venturi-Drosselung, und eine Steuereinheit zur aktiven Steuerung der ersten und der zweiten Regulierungseinrichtung entsprechend der gemessenen Strömungsgeschwindigkeit des Abgases und der entnommenen Abgasprobe, um eine proportionale Probenahme zu erhalten.

Aus der US 2,982,131 ist eine Vorrichtung zur automatischen isokinetischen Probenahme von Luft und anderen Fluiden bekannt. Die Vorrichtung umfasst ein motorbetriebenes Bypassventil, das von einer Wheatstone-Brücke oder dergleichen gesteuert wird. Messfühler, die empfindlich auf Änderungen der Luftgeschwindigkeit reagieren, stellen die Messelemente in einer solchen Brücke bereit. In einer solchen Vorrichtung folgt die gesteuerte Probeentnahmegeschwindigkeit Änderungen der Windgeschwindigkeit sehr genau.

Aufgabe der vorliegenden Erfindung ist es, eine Vorrichtung, ein Verfahren und eine Verwendung zur Entnahme einer Probe aus einem strömenden Aerosol bereitzustellen, mittels der bei einer hohen Flexibilität bezüglich des Entnahmeorts eine für das Aerosol repräsentative Partikelkonzentration oder Aktivitätskonzentration bestimmt werden kann.

Diese Aufgabe wird durch die Merkmale der Ansprüche 1, 13 und 14 gelöst. Zweckmäßige Ausgestaltungen der Erfindung ergeben sich aus den Merkmalen der Ansprüche 2 bis 12.

Erfindungsgemäß ist eine Vorrichtung zur isokinetischen Entnahme einer Probe aus einem strömenden Aerosol vorgesehen. Die Vorrichtung umfasst einen Probensammler mit einer Einlassöffnung oder mit einem Ansaugstück, welches eine Einlassöffnung aufweist und die Einlassöffnung gasleitend mit dem Probensammler verbindet. Bei dem Ansaugstück kann es sich um einen Schlauch oder eine Rohrleitung oder auch nur ein kurzes Schlauch- oder Rohrstück handeln. Der Probensammler kann also selbst die Einlassöffnung aufweisen, bei einem kurzen Ansaugstück sehr nah an der Einlassöffnung angeordnet sein oder bei einem längeren Ansaugstück in einigem Abstand zur Einlassöffnung angeordnet sein. Der Schlauch, die Rohrleitung, das Schlauchstück und das Rohrstück können jeweils aus Teflon bestehen oder zumindest eine mit Teflon beschichtete Oberfläche aufweisen. Durch das Teflon wird ein durch Elektrostatik bewirktes Abscheiden von Partikeln an der jeweiligen Oberfläche des Schlauchs, der Rohrleitung, des Schlauchstücks und des Rohrstücks vermieden. Die Vorrichtung umfasst weiterhin eine mit dem Probensammler und über den Probensammler oder den Probensammler und das Ansaugstück mit der Einlassöffnung gasleitend verbundene Vakuumpumpe, einen an oder in der Einlassöffnung oder in einer Entfernung von höchstens 7,5 cm, insbesondere höchstens 6,5 cm, insbesondere höchstens 5,5 cm, insbesondere höchstens 5 cm, von einem Rand der Einlassöffnung angeordneten Strömungssensor zur Erfassung der Strömungsgeschwindigkeit des strömenden Aerosols im Bereich der Einlassöffnung, einen in einem Strömungskanal innerhalb der Vorrichtung angeordneten Durchflussmesser zur Erfassung der Strömungsgeschwindigkeit in der Vorrichtung und eine Regeleinheit, wobei die Vorrichtung dazu eingerichtet ist, die vom Strömungssensor und vom Durchflussmesser jeweils erfasste Strömungsgeschwindigkeit an die Regeleinheit zu übermitteln und die Regeleinheit zur isokinetischen Regelung eines Aerosoldurchflusses durch die Einlassöffnung in Abhängigkeit der an die Regeleinheit übermittelten Strömungsgeschwindigkeiten eingerichtet ist. Die Regeleinheit kann beispielsweise ein Computer sein, der durch eine entsprechende Software zur isokinetischen Regelung eingerichtet ist. Bei dem Durchflussmesser kann es sich um einen thermischen Durchflussmesser handeln. Ein thermischer Durchflussmesser benötigt für seine Funktion gegenüber Durchflussmessern, welche auf anderen Messprinzipien beruhen, keine Druck- und Temperaturkompensation. Darüber hinaus sind sie relativ genau und weisen eine relativ kurze Ansprechzeit auf.

Um eine An- bzw. Umströmung des Strömungssensors möglichst wenig durch die Einlassöffnung oder sonstige Teile der Vorrichtung zu beeinflussen, kann der Strömungssensor mindestens 2 cm, insbesondere mindestens 3 cm, insbesondere mindestens 4 cm, insbesondere mindestens 4,5 cm vom Rand der Einlassöffnung und der Einlassöffnung entfernt angeordnet sein. Auch wenn der Strömungssensor nicht direkt an der Einlassöffnung angeordnet ist, wird die von diesem Sensor gemessene Strömungsgeschwindigkeit für die Bestimmung des Volumenstroms an der Eingangsöffnung als die Strömungsgeschwindigkeit an der Eingangsöffnung erachtet.

Ein üblicher Durchmesser der für die Erfindung relevanten Partikel des Aerosols liegt im Bereich von 0,1 bis 20 $\mu$m.

Die Vorrichtung umfasst weiterhin eine zur Berechnung einer Partikelkonzentration oder Aktivitätskonzentration im Aerosol eingerichtete Auswerteeinheit, wobei die Vorrichtung weiterhin dazu eingerichtet ist, die vom Strömungssensor erfasste Strömungsgeschwindigkeit oder der vom Durchflussmesser erfasste Strömungsgeschwindigkeit an die Auswerteeinheit zu übermitteln. Die Berechnung der Partikelkonzentration oder Aktivitätskonzentration durch die Auswerteeinheit erfolgt auf der Grundlage

- einer Zeit des Probesammelns im Probensammler,

- einer erfassten Anzahl oder einer erfassten Radioaktivität von in dieser Zeit im Probensammler gesammelten Partikeln und

- der vom Strömungssensor erfassten Strömungsgeschwindigkeit in Kombination mit einer Querschnittsfläche der Einlassöffnung oder der vom Durchflussmesser erfassten Strömungsgeschwindigkeit in Kombination mit einer Querschnittsfläche des Strömungskanals an der Stelle des Durchflussmessers.

Die Auswerteeinheit kann dabei auch aus mehreren Untereinheiten bestehen. Eine solche Untereinheit kann beispielsweise eine Zeiterfassungseinheit und eine weitere solche Untereinheit eine Berechnungseinheit sein oder umfassen. Bei der Auswerteeinheit kann sich beispielsweise um einen Computer handeln, welcher mit dem Rest der Vorrichtung durch ein oder mehrere Datenübertragungsmittel verbunden ist. Beim Computer kann es sich um denselben Computer handeln, der auch die Regeleinheit bildet. Die Unterscheidung zwischen Regeleinheit und Auswerteeinheit und ggf. weiteren Einheiten im Sinne der Erfindung kann also rein funktional sein. Beim Datenübertragungsmittel kann sich um eine Datenleitung oder auch um ein Mittel zur Datenfernübertragung handeln. Die Übertragung kann beispielsweise über ein Funksignal, zum Beispiel nach dem Bluetooth-Standard, erfolgen.

Die Anzahl der im Probensammler gesammelten Partikel, die im Probensammler gesammelte Radioaktivität und gegebenenfalls sogar die Art der Partikel oder Radioaktivität kann beispielsweise dadurch erfasst werden, dass im Probensammler enthaltene Sammelplatten aus dem Probensammler entnommen und analysiert werden. Beispielsweise kann die auf einer der Sammelplatten gesammelte Radioaktivität und dabei gegebenenfalls auch die Art der Radioaktivität bzw. Strahlung und damit gegebenenfalls die Art der Partikel bestimmt werden. Bei der Art der Radioaktivität kann es sich beispielsweise um ein einem bestimmten Isotop entsprechendes Strahlungsspektrum und/oder um Alpha-, Beta- oder Gamma-Strahlung handeln. Zur Bestimmung der Anzahl der Partikel können die Partikel von der Sammelplatte entfernt und dann einzeln in einem Partikelzähler erfasst werden. Das Entfernen der Partikel von der Sammelplatte kann beispielsweise durch ein seitliches und/oder schräges Anströmen durch einen Gasstrom, insbesondere Luftstrom, bewirkt werden. Wenn das durchschnittliche Gewicht eines Partikels bekannt ist, kann die Partikelanzahl auch dadurch bestimmt werden, dass die Sammelplatten jeweils vor dem Einsetzen in den Probensammler und nach der Entnahme aus dem Probensammler gewogen werden und die Gewichtsdifferenz für die jeweilige Sammelplatte ermittelt wird. Die Anzahl der Partikel auf der jeweiligen Sammelplatte ergibt sich dann als Quotient aus dieser Gewichtsdifferenz und dem durchschnittlichen Gewicht eines Partikels.

Die Vorrichtung umfasst weiterhin mindestens eine Sonde zur Erfassung der Strömungsrichtung des Aerosols, um eine Simulation einer isokinetischen Entnahme der Probe bei schräger oder verwirbelter Anströmung der Einlassöffnung durch das strömende Aerosol zu ermöglichen, weil bei schräger oder verwirbelter Anströmung der Einlassöffnung eine isokinetische Entnahme der Probe nicht möglich ist. Die Sonde ist dabei so angeordnet, dass dadurch die Strömungsrichtung an oder in der Einlassöffnung oder in einer Entfernung von höchstens 7,5 cm, insbesondere höchstens 6,5 cm, insbesondere höchstens 5,5 cm, insbesondere höchstens 5 cm, vom Rand der Einlassöffnung erfasst werden kann. Um eine An- bzw. Umströmung der Sonde möglichst wenig durch die Einlassöffnung oder sonstige Teile der Vorrichtung zu beeinflussen, kann die Sonde mindestens 2 cm, insbesondere mindestens 3 cm, insbesondere mindestens 4 cm, insbesondere mindestens 4,5 cm vom Rand der Einlassöffnung und der Einlassöffnung entfernt angeordnet sein. Die Sonde zur Erfassung der Strömungsrichtung kann mit dem Strömungssensor eine Einheit bilden. Dazu kann die Sonde beispielsweise als Mehrlochsonde ausgebildet sein, welche eine Öffnung mit einem Sensor zur Erfassung der Strömungsgeschwindigkeit und mehrere weitere Öffnungen mit jeweils einem Sensor zur Erfassung der Strömungsrichtung umfasst. Die Sonde zur Erfassung der Strömungsrichtung kann aber auch separat von dem Strömungssensor ausgebildet sein.

Je nach Positionierung der Einlassöffnung kann die Strömungsrichtung im Bereich der Einlassöffnung von der vorherrschenden Hauptströmungsrichtung des Aerosols, etwa wegen Verwirbelungen, abweichen. Die für das Aerosol ermittelte Partikelkonzentration oder Aktivitätskonzentration weicht bei einer gegebenen Strömungsgeschwindigkeit umso mehr von der tatsächlichen Partikelkonzentration oder Aktivitätskonzentration im Aerosol ab, je mehr die Strömungsrichtung im Bereich der Einlassöffnung von einer direkt von vorne auf die Einlassöffnung treffenden Strömung des Aerosols abweicht. Bisher bekannte Vorrichtungen zur isokinetischen Entnahme einer Probe aus einem strömenden Aerosol tragen dem jedoch keine Rechnung. Die Einbaumöglichkeiten dieser Vorrichtungen sind daher bezüglich ihrer Lage in einem das strömende Aerosol leitenden Aerosolleitsystem, wie etwa einem Abluftkamin, sehr eingeschränkt. Je nach Strömungsrichtung im Bereich der Einlassöffnung sind mit bisher bekannten Vorrichtungen entnommene Proben auch nicht sehr repräsentativ im Hinblick auf die tatsächliche Partikelkonzentration im strömenden Aerosol.

Bei einer angestellten Anströmung der Einlassöffnung, d. h. einer von einer direkt von vorne erfolgenden Anströmung abweichenden Anströmung der Einlassöffnung durch das Aerosol, ist die Anströmung im Allgemeinen wirbelbehaftet und die Partikelverteilung damit inhomogen. Wirbelbehaftete Strömungen weisen örtliche und zeitliche Instationaritäten auf. Bei bekannten Probeentnahmeverfahren kann ein Vorhandensein instationärer Strukturen und damit verbundener Konzentrationsgradienten trotz Einhaltung der Einbaukriterien gemäß der oben genannten internationalen Standards nicht ausgeschlossen werden.

Die mittels der Sonde der erfindungsgemäßen Vorrichtung mögliche Erfassung der Strömungsrichtung des Aerosols im Bereich der Einlassöffnung ermöglicht die Berücksichtigung von Fehlern, die durch Abweichungen von einer direkt von vorne auf die Einlassöffnung treffenden Strömung des Aerosols verursacht werden, bei einer Bestimmung der Partikelkonzentration oder Aktivitätskonzentration im Aerosol. Durch die Erfassung der Strömungsrichtung kann eine durch Strömungsanstellung verfälscht ermittelte Partikelkonzentration oder Aktivitätskonzentration stets durch einen Korrekturfaktor, der der erfassten Strömungsrichtung entspricht und durch Kalibrierung zuvor ermittelt wurde, korrigiert werden.

Die Vorrichtung zur Übermittlung der erfassten Strömungsrichtung kann an die Auswerteeinheit und die Auswerteeinheit zur Bestimmung eines von der Strömungsrichtung und der Strömungsgeschwindigkeit abhängigen Korrekturfaktors für eine Korrektur der Berechnung der Partikelkonzentration oder Aktivitätskonzentration im Aerosol und zur Berücksichtigung des Korrekturfaktors bei der Berechnung der Partikelkonzentration oder Aktivitätskonzentration im Aerosol eingerichtet sein. Dabei ist die Korrektur bei einer gegebenen Strömungsgeschwindigkeit umso stärker, je mehr die Strömungsrichtung von einer frontal, d. h. direkt von vorne, auf die Einlassöffnung treffenden Strömung des Aerosols abweicht. Die Auswerteeinheit berechnet also die Partikelkonzentration oder Aktivitätskonzentration im Aerosol und kann dabei einen von der Strömungsrichtung und der Strömungsgeschwindigkeit abhängigen Korrekturfaktor einbeziehen. Der Korrekturfaktor ist dabei der Kehrwert eines Verlustfaktors. Der Verlustfaktor gibt an, welcher Anteil der tatsächlich vorhandenen Partikel im Aerosol, welches von der erfindungsgemäßen Vorrichtung als Probe entnommen bzw. eingesaugt wird, im Probensammler gesammelt und auch erfasst wird. Der Verlustfaktor ist dabei ein von der konkreten Ausgestaltung der erfindungsgemäßen Vorrichtung abhängiger Wert, welcher der Vorrichtung immanent ist.

Die Auswerteeinheit kann dazu eingerichtet sein, den Korrekturfaktor gemäß einer die Strömungsrichtung und die Strömungsgeschwindigkeit berücksichtigenden Formel oder gemäß für verschiedene Strömungsrichtungen und Strömungsgeschwindigkeiten hinterlegten Werten für den Korrekturfaktor oder den Verlustfaktor zu ermitteln. Die Werte für den Korrekturfaktor können dabei in Form einer Wertetabelle, einer Kennlinie, eines Kennfelds oder einer zweidimensionalen Matrix hinterlegt sein. Die zweidimensionale Matrix kann beispielsweise die Parameter Anströmwinkel und Strömungsgeschwindigkeit bzw. Entnahmegeschwindigkeit umfassen. Die Wertetabelle, die Kennlinie, das Kennfeld oder die zweidimensionale Matrix können in einer Datenbank oder der Auswerteeinheit hinterlegt sein. Zur erstmaligen Ermittlung der Korrekturfaktoren für eine solche Wertetabelle, Kennlinie oder zweidimensionale Matrix oder ein solches Kennfeld ist es erforderlich, die Vorrichtung mittels eines Aerosolgenerators, welcher ein definiertes Aerosol mit Partikeln einer definierten Größe in einer definierten Konzentration abgibt, zu kalibrieren. Dabei kann wie folgt vorgegangen werden:

Zunächst wird eine Strömung des Aerosols mit einer Strömungsgeschwindigkeit im Bereich der Strömungsgeschwindigkeiten erzeugt, wobei die Strömungsgeschwindigkeit so gewählt wird, dass sie im vorgesehenen Einsatzbereich der erfindungsgemäßen Vorrichtung vorkommen kann. Die Strömungsrichtung des Aerosols wird zunächst so gewählt, dass die Strömung direkt von vorne auf die Einlassöffnung trifft. Die bei dieser Anordnung ermittelte Partikelkonzentration wird als Maximalwert für die gewählte Strömungsgeschwindigkeit erachtet. Anschließend wird die Einlassöffnung in unterschiedlich von dieser Strömungsrichtung abweichenden Winkeln angeströmt. Die dabei von der Sonde zur Erfassung der Strömungsrichtung erfasste Strömungsrichtung wird in die Wertetabelle eingetragen und die dabei ermittelte Partikelkonzentration oder Aktivitätskonzentration wird als prozentualer Wert vom Maximalwert dieser Strömungsrichtung in der Wertetabelle zugeordnet. Dieser prozentuale Wert ist dabei der Korrekturfaktor für die gewählte Strömungsgeschwindigkeit. Anschließend kann der Vorgang mit verschiedenen anderen Strömungsgeschwindigkeiten, die im vorgesehenen Einsatzbereich der erfindungsgemäßen Vorrichtung vorkommen können, wiederholt werden. Wenn sich dabei ein durch eine mathematische Funktion darstellbarer Zusammenhang zwischen den unterschiedlichen Strömungsrichtungen und Strömungsgeschwindigkeiten und den dabei jeweils ermittelten Partikelkonzentrationen oder Aktivitätskonzentrationen ergibt, kann der Korrekturfaktor auch durch eine entsprechende Formel berücksichtigt werden. Die Strömungsrichtung kann beispielsweise jeweils als ein Winkel angegeben werden, um den die Strömung des Aerosols von der frontal auf die Einlassöffnung treffenden Strömung des Aerosols abweicht. Detailliert wird die Ermittlung von Korrekturfaktoren in Abhängigkeit unterschiedlicher Anströmwinkel und Strömungsgeschwindigkeiten und die Erstellung einer Wertetabelle in den Ausführungsbeispielen näher erläutert.

Wenn der Korrekturfaktor nicht durch eine entsprechende Formel bei der Berechnung der Partikelkonzentration oder Aktivitätskonzentration im Aerosol berücksichtigt wird, kann der Korrekturfaktor auch aus der Wertetabelle entnommen werden. Dazu können beispielsweise ein der gemessenen Strömungsrichtung entsprechender Winkel und eine der gemessenen Strömungsgeschwindigkeit entsprechende Strömungsgeschwindigkeit in der Wertetabelle gesucht und der diesem Winkel und dieser Strömungsgeschwindigkeit zugeordnete Korrekturfaktor ermittelt werden. Ist/sind ein solcher Winkel und/oder eine solche Strömungsgeschwindigkeit nicht konkret in der Wertetabelle enthalten, weil er/sie zwischen zwei Winkeln der Wertetabelle liegt/liegen, kann der entsprechende Korrekturfaktor auch durch Interpolation ermittelt werden. Um dies zu vereinfachen, kann/können aus den Werten der Wertetabelle auch ein Kennfeld oder Kennlinien erstellt werden. Daraus lässt sich dann auch für Zwischenwerte leicht ein Korrekturfaktor ermitteln.

Zusätzlich kann der Korrekturfaktor in dieser Weise für Partikel unterschiedlicher Größe ermittelt werden. Dazu ist es erforderlich, dass weitere Kalibrierungen jeweils mit einem definierten Aerosol mit sich jeweils in ihrer Größe unterscheidenden Partikeln durchgeführt werden. Daraus können dann beispielsweise eine Wertetabelle für Partikel einer Größe von etwa 1 μm und eine weitere Wertetabelle für Partikel einer Größe von etwa 20 μm ermittelt werden. Aus einer Vielzahl derartiger Wertetabellen kann beispielsweise ein Kennfeld für eine bestimmte Strömungsgeschwindigkeit oder eine Anströmwinkel, Partikelgröße und Strömungsgeschwindigkeit umfassende dreidimensionale Matrix zusammengestellt werden. Aus dem Kennfeld können dann Korrekturfaktoren für die bestimmte Strömungsgeschwindigkeit und aus der Matrix Korrekturfaktoren für verschiedene Strömungsgeschwindigkeiten entnommen werden. Bei herkömmlichen, die Strömungsrichtung nicht berücksichtigenden Verfahren werden bisher Verluste von Partikeln einer anderen Größe als etwa 1 μm nicht berücksichtigt. Bisherige Verfahren waren daher insbesondere für Partikel einer anderen Größe als etwa 1 μm nicht repräsentativ.

Durch die Berücksichtigung der Strömungsrichtung beim erfindungsgemäßen Verfahren und der erfindungsgemäßen Vorrichtung kann die Abweichung der auf der Grundlage der im Probensammler gesammelten Partikel ermittelten Partikelkonzentration oder Aktivitätskonzentration im Aerosol von der tatsächlichen Partikelkonzentration oder Aktivitätskonzentration minimiert werden. Insbesondere bei Abweichungen vom Normbetrieb durch Schwankungen der Strömungsgeschwindigkeit und damit in unterschiedlichem Ausmaß auftretenden Verwirbelungen entspricht die so ermittelte Partikelkonzentration oder Aktivitätskonzentration im Aerosol daher genauer der tatsächlichen Partikelkonzentration oder Aktivitätskonzentration im Aerosol als der durch herkömmliche Verfahren ermittelten Partikelkonzentration oder Aktivitätskonzentration im Aerosol.

Weiterhin ermöglicht die Berücksichtigung der Strömungsrichtung auch eine Anordnung der Einlassöffnung in einer Anlage oder in einem Bereich einer Anlage, welche bzw. welcher bisher zu einer repräsentativen Probeentnahme nicht geeignet war, etwa weil der durchschnittliche Winkel zwischen der Achse der Einlassöffnung und der Achse bzw. Richtung der Strömung des Aerosols am Ort der Entnahme mehr als 20° beträgt. Die erfindungsgemäße Vorrichtung und das erfindungsgemäße Verfahren ermöglichen daher eine große Flexibilität bei der Wahl eines Entnahmeortes innerhalb eines Ab- oder Fortluftkanals. Viele bisher bestehende Beschränkungen bezüglich der Wahl des Entnahmeortes innerhalb eines Ab- oder Fortluftkanals entfallen.

Bei einer Ausgestaltung der Erfindung umfasst die Sonde zur Erfassung der Strömungsrichtung auch den Strömungssensor zur Erfassung der Strömungsgeschwindigkeit. Dazu oder unabhängig davon kann die Sonde als Mehrlochsonde ausgebildet sein. Bei einer Ausgestaltung einer Mehrlochsonde weist diese an einer kegelförmigen Sondenspitze mehrere in unterschiedliche Richtungen weisende oder an unterschiedlichen Positionen angeordnete Öffnungen, d.h. Löcher, auf. Jede der Öffnungen führt zu einem Sensor zur Erfassung der Strömungsgeschwindigkeit an dieser Öffnung. Dabei kann es sich beispielsweise um einen Sensor zur Erfassung des auf den Sensor durch das Strömen des Aerosols ausgeübten Staudrucks handeln. Aus der Druckverteilung an der kegelförmigen Sondenspitze lassen sich mit Hilfe geeigneter Korrelationen der Bernoulli-Gleichung gleichzeitig die Strömungsrichtung, d.h. der Anströmwinkel, mit dem das Aerosol die Mehrlochsonde anströmt, und die Strömungsgeschwindigkeit bestimmen. Derartige Mehrlochsonden und die die damit erfolgende Bestimmung von Anströmwinkeln und Strömungsgeschwindigkeit sind bekannt. Solche Mehrlochsonden können beispielsweise von der Firma Vectoflow GmbH, Friedrichshafener Str. 1, D-82205 Gilching, Deutschland bezogen werden.

Am oder im Probensammler kann ein Mechanismus zur Freisetzung der im Probensammler gesammelten Partikel in einen Gasstrom angeordnet sein. Durch die Freisetzung der Partikel ist ein Austausch der im Probensammler enthaltenen Sammelplatte(n), nachdem diese ihre Sammelkapazität erreicht hat/haben, nicht erforderlich. Je mehr Partikel auf einer Sammelplatte gesammelt wurden, desto häufiger kommt es zu einem sogenannten "Bounce Off"-Effekt, d. h. zu einem Abprallen eigentlich auf der Sammelplatte zu sammelnder Partikel, so dass diese der Sammlung entgehen. Dies führt zu fehlerhaften Ergebnissen bei der Bestimmung der Partikelkonzentration.

Die Vorrichtung kann außerdem eine in Strömungsrichtung nach dem Probensammler, insbesondere innerhalb des gasleitenden Teils der Vorrichtung, angeordnete Detektoreinheit zur Bestimmung der Radioaktivität oder der Anzahl der Partikel und optional einer Art der im Probensammler gesammelten und davon freigesetzten Radioaktivität oder Partikel umfassen. Alternativ oder zusätzlich kann die Vorrichtung eine im Probensammler oder auf der Außenseite des Probensammlers angeordnete Detektoreinheit zur Bestimmung der Radioaktivität oder der Anzahl der Partikel und optional einer Art der im Probensammler gesammelten Radioaktivität oder Partikel während oder nach dem Sammeln aber vor dem Freisetzen der gesammelten Partikel umfassen. Die Vorrichtung ist dabei dazu eingerichtet, die von der Detektoreinheit bestimmte Radioaktivität oder Anzahl der Partikel, insbesondere gesondert nach der jeweiligen Art der Radioaktivität oder Partikel, an die Auswerteeinheit zu übermitteln, wobei die Auswerteeinheit, insbesondere durch eine entsprechende Software, dazu eingerichtet ist, die Aktivitätskonzentration oder Partikelkonzentration im Aerosol auf der Grundlage dieser übermittelten Radioaktivität oder Anzahl unter Berücksichtigung des Korrekturfaktors zu berechnen.

Bei der Partikelart kann es sich, insbesondere bei einer Probeentnahme aus dem Ab- oder Fortluftstrom einer kerntechnischen Anlage, um radioaktive Partikel handeln. Diese können ein radioaktives Isotop umfassen oder daraus bestehen. Die Detektoreinheit kann dann eine Detektoreinheit zur Bestimmung der Radioaktivität sein. Die radioaktiven Partikel können jeweils ein unterschiedliches Strahlungsspektrum oder eine unterschiedliche Strahlungsart emittierende Partikel sein. Die Detektoreinheit kann zusätzlich eine Detektoreinheit zur Bestimmung des den Partikeln jeweils Radioaktivität verleihenden Isotops sein. So können beispielsweise radioaktives Iod enthaltende Partikel von radioaktives Cäsium enthaltenden Partikeln unterschieden werden. Für die erfindungsgemäße Vorrichtung geeignete Detektoreinheiten können beispielsweise von SAINT-GOBAIN, Tour Saint-Gobain, 12 place de l'Iris, 92400 Courbevoie, Frankreich bezogen werden. Die Detektoreinheit kann mindestens einen plattenförmigen Kunststoffszintillator, mindestens eine Szintillationsschicht, mindestens einen Halbleiterdetektor oder mindestens einen anderen Detektortyp umfassen. Mit dem plattenförmigen Kunststoffszintillator, der Szintillationsschicht und dem Halbleiterdetektor ist z. B. jeweils die Detektion von Alpha- und Beta-Strahlung möglich. Die im Probensammler angeordnete Detektoreinheit kann direkt an der/den Sammelplatte(n) angeordnet sein.

Durch das Vorsehen des Mechanismus zur Freisetzung der Partikel im Probensammler kann der Probensammler auch an Positionen angeordnet werden, welche nicht oder nur schwer zugänglich sind, weil durch den Mechanismus eine, insbesondere händische, Entnahme der gesammelten Partikel aus dem Probensammler entfallen kann. Die Entnahme der Partikel aus dem Probensammler erfolgt bisher üblicherweise durch Entnahme mindestens einer in dem Probensammler enthaltenen Sammelplatte zur Sammlung der Partikel.

Bei dem Probensammler kann es sich um einen Impaktor, insbesondere einen Kaskadenimpaktor, handeln. Wenn der Probensammler ein Impaktor, insbesondere ein Kaskadenimpaktor, ist, kann der Mechanismus einen Mechanismus zum Schwenken oder zum Schwenken und linearen Verschieben mindestens einer im Probensammler enthaltenen Sammelplatte umfassen. Dabei kann das Schwenken derart erfolgen, dass die Sammelplatte zunächst in eine Position geschwenkt wird, in welcher die Oberfläche der Sammelplatte parallel zum Gasstrom in dem Probensammler angeordnet ist. Je nachdem, wie der Impaktor aufgebaut ist, kann es erforderlich sein, die Sammelplatte linear zu verschieben, um das Schwenken der Sammelplatte zu ermöglichen. Um ein besseres Abblasen der Partikel von der Sammelplatte zu erreichen, kann die Sammelplatte, insbesondere in einer eingetakteten Schwenkbewegung, wieder etwas, beispielsweise um 4°, aus dieser Position herausgeschwenkt werden. Dadurch wird ein größerer Bereich der Sammelplatte mit den darauf gesammelten Partikeln direkt angeströmt und die Strömung lokal auf der Oberfläche der Sammelplatte beschleunigt. Der Randbereich der Sammelplatte kann so ausgeformt sein, dass er zu einem im Vergleich zur Stärke der Sammelplatte deutlich dünneren Rand zusammenläuft. Dadurch kann ein besseres, d. h. verwirbelungsarmes, An- und Abströmen eines Gasstroms an der Sammelplatte beim Schwenken der Sammelplatte im Gasstrom und dadurch ein besseres Freisetzen daran anhaftender Partikel ermöglicht werden. Außerdem kann durch diese spezielle Ausgestaltung des Randbereichs die Gefahr einer sich auf das Freisetzen der Partikel negativ auswirkenden Ablösung der Strömung von der Sammelplatte deutlich verringert werden.

Der Probensammler kann direkt im strömenden Aerosol angeordnet sein und/oder das Ansaugstück kann ein gerades, d.h. nicht gekrümmtes, höchstens 100 cm, insbesondere höchstens 50 cm, insbesondere höchstens 20 cm, insbesondere höchstens 10 cm, langes Rohr oder ein gerader, d.h. nicht gekrümmt verlaufender, höchstens 100 cm, insbesondere höchstens 50 cm, insbesondere höchstens 20 cm, insbesondere höchstens 10 cm, langer Schlauch sein. Dadurch, dass das Rohr oder der Schlauch gerade ausgeführt ist, werden durch eine Strömungsumlenkung bewirkte Partikelverluste an der Wandung des Rohres oder des Schlauches vermieden. Wenn das Ansaugstück ein solches Rohr oder ein solcher Schlauch ist, kann der Probensammler beispielsweise unmittelbar außerhalb eines das Aerosol leitenden Ab- oder Fortluftkanals angeordnet sein. Dazu kann der Ab- oder Fortluftkanal in Strömungsrichtung kurz nach der Einlassöffnung eine Krümmung aufweisen, aus welcher das Ansaugstück gerade herausgeführt wird.

Durch die Anordnung des Probensammlers im strömenden Aerosol und/oder durch das gerade und verhältnismäßig kurze Ansaugstück wird erreicht, dass keine oder allenfalls sehr geringe Partikelverluste auf dem Weg zwischen der Einlassöffnung und den Probensammler erfolgen können. Wenn das entnommene Aerosol, wie es derzeit üblich ist, über eine längere Leitung zum Probensammler transportiert wird, kann es innerhalb der Leitung zu einem Verlust von einem Teil der in dem Aerosol enthaltenen Partikel durch Ablagerung an einer Wand der Leitung kommen. Dies kann beispielsweise auf Grund von Sedimentation, Diffusion, Impaktion, Kondensation oder Trägheitsabscheidung aus turbulenter Strömung, insbesondere bei Partikeln ab einer Größe von 1 $\mu$m, erfolgen. Um Kondensation innerhalb der Leitung zu verhindern, ist es bisher teilweise üblich, eine aufwendige und regelbare Beheizung der Leitung vorzusehen. Dennoch auftretende Verluste an Partikeln werden derzeit über entsprechende Korrekturfaktoren herausgerechnet. Erfindungsgemäß kann die Problematik der Partikelverluste durch lange Transportwege, zumindest im Wesentlichen, verhindert werden, indem der Probensammler im strömenden Aerosol angeordnet ist und/oder ein gerades und verhältnismäßig kurzes Ansaugstück vorgesehen ist. Die so erhaltenen Probe ist deutlich repräsentativer als bisher über lange Leitungen zum Probensammler geführte Proben.

Der Durchflussmesser kann in Strömungsrichtung innerhalb der Vorrichtung nach dem Probensammler oder in dem Ansaugstück angeordnet sein.

Die erfindungsgemäße Vorrichtung umfasst ein Trägersystem mit einer innerhalb des strömenden Aerosols anzuordnenden verfahrbaren Lagerung, wobei der Probensammler mit der Einlassöffnung oder mit dem Ansaugstück mit der Einlassöffnung von der Lagerung gehalten wird. Die Verfahrbarkeit kann dabei so ausgestaltet sein, dass die Einlassöffnung quer zu einer durch ein Aerosolleitsystem vorgegebenen Hauptströmungsrichtung verfahren werden kann. Bei dem Aerosolleitsystem kann es sich um einen Ab- oder Fortluftkanal für das Aerosol, wie z. B. einen Kamin, handeln. Durch ein Verfahren der Einlassöffnung innerhalb des strömenden Aerosols während der Entnahme der Probe wird die Repräsentativität der Probe für das Aerosol gegenüber einer Entnahme der Probe mittels einer innerhalb des strömenden Aerosols feststehender Einlassöffnung erhöht. Die Erfüllung der isokinetischen Bedingungen nach den internationalen Standards beruht nämlich auf der Annahme einer gleichmäßigen Strömungsgeschwindigkeit über den gesamten Querschnitt eines Ab- oder Fortluftkanals. Tatsächlich ist die Strömungsgeschwindigkeit aber keineswegs über den gesamten Querschnitt eines Ab- oder Fortluftkanals gleich. Durch das Verfahren der Einlassöffnung kann eine kontinuierliche zeitliche und örtliche Mittelung der entnommenen Probe über den Querschnitt des Ab- oder Fortluftkanals während der Probeentnahme erfolgen. Die zeitliche und örtliche Mittelung am Entnahmeort ist insbesondere bei einer wirbelbehafteten Strömung, die mit Konzentrationsgradienten über den Kanalquerschnitt einhergehen kann, von Bedeutung. Mittels der erfindungsgemäßen Vorrichtung kann bei einer Probeentnahme, bei welcher die Einlassöffnung verfahren wird, auch der sich durch das Verfahren der Einlassöffnung gegenüber der Einlassöffnung verändernde Anströmwinkel berücksichtigt werden. Trotz des Verfahrens der Einlassöffnung ermöglicht die erfindungsgemäße Vorrichtung eine Simulation einer isokinetische Probeentnahme.

Bei einer Ausgestaltung ist das Trägersystem ein Trägersystem zum Verfahren der Lagerung innerhalb eines zweidimensionalen, insbesondere kartesischen, Koordinatensystems. Das ermöglicht eine Probeentnahme über einen großen Teil der Querschnittsfläche des Ab- oder Fortluftkanals, beispielsweise über eine Fläche, welche mindestens 40 %, insbesondere mindestens 50 %, insbesondere mindestens 60 %, insbesondere mindestens 70 %, der Querschnittsfläche des Ab- oder Fortluftkanals entspricht. Durch die zweidimensionalen Verfahrbarkeit über den großen Teil der Querschnittsfläche des Ab- oder Fortluftkanals kann selbst beim Vorhandensein von Konzentrationsgradienten am Entnahmeort eine für das Aerosol im Ab- oder Fortluftkanal repräsentative Probe entnommen werden. Dabei wird die Partikelkonzentration oder Aktivitätskonzentration in der Probe sowohl zeitlich über den Zeitraum der Sammlung der Probe als auch örtlich über die Querschnittsfläche des Ab- oder Fortluftkanals gemittelt. Die Probeentnahme bleibt somit auch unter schwierigen Bedingungen repräsentativ. Für eine zeitliche und örtliche Mittelung etwaiger Gradienten der Partikelkonzentration am Entnahmeort kann die Einlassöffnung mittels des Trägersystems mit unterschiedlichen Bewegungsgeschwindigkeiten und Bewegungsmustern verfahren werden.

Die Regeleinheit kann, insbesondere durch eine entsprechende Software, dazu eingerichtet sein, zur isokinetischen Regelung des Aerosoldurchflusses die Leistung der Vakuumpumpe oder einen Einlass durch ein in Strömungsrichtung nach dem Probensammler und nach dem Durchflussmesser aber vor der Vakuumpumpe angeordnetes Nebenstromventil zu steuern. Es ist auch möglich, dass die Regeleinheit, insbesondere durch eine entsprechende Software, dazu eingerichtet ist, zur isokinetischen Regelung den Aerosoldurchfluss durch eine in Strömungsrichtung innerhalb der Vorrichtung nach dem Probensammler, insbesondere nach der Vakuumpumpe, angeordnete Durchlassöffnung für das Aerosol zu steuern. Bei der Durchlassöffnung kann es sich um eine Auslassöffnung handeln.

Die Erfindung betrifft auch eine Verwendung der erfindungsgemäßen Vorrichtung zur Entnahme einer Probe aus einem strömenden Aerosol und zur Bestimmung einer Partikelkonzentration oder Aktivitätskonzentration in dem strömenden Aerosol auf Grundlage einer Anzahl von in der Probe detektierten Partikeln oder auf Grundlage einer in der Probe detektierten Radioaktivität. Dabei kann die Vorrichtung im Abluftstrom einer kerntechnischen Anlage verwendet werden. Die Partikel können dabei radioaktive Partikel sein.

Die Erfindung betrifft weiterhin ein Verfahren zur isokinetischen Entnahme einer Probe aus einem strömenden Aerosol bei frontaler Anströmung einer für die Entnahme vorgesehenen Einlassöffnung durch das strömende Aerosol und zur Simulation einer isokinetischen Entnahme der Probe aus dem Aerosol bei schräger oder verwirbelter Anströmung der Einlassöffnung durch das strömende Aerosol und zur Bestimmung einer Partikelkonzentration oder Aktivitätskonzentration in dem strömenden Aerosol. Dabei werden mittels einer in dem strömenden Aerosol angeordneten erfindungsgemäßen Vorrichtung die folgenden Schritte ausgeführt:

a) Einsaugen der Probe durch die Einlassöffnung der Vorrichtung mit der vom Strömungssensor der erfindungsgemäßen Vorrichtung erfassten Strömungsgeschwindigkeit des strömenden Aerosols und Hindurchleiten der Probe durch den Probensammler der Vorrichtung für eine vorgegebene Zeit,

b) Bestimmen des in einer vorgegebenen Zeit durch die Vorrichtung geströmten Volumens,

c) Bestimmen der Anzahl oder der Radioaktivität der in dem Probensammler gesammelten Partikel,

d) Bestimmen eines von der Strömungsgeschwindigkeit und der Strömungsrichtung des Aerosols abhängigen Korrekturfaktors für die vorgegebene Zeit, wobei der Korrekturfaktor gemäß einer die Strömungsgeschwindigkeit und die Strömungsrichtung berücksichtigenden Formel oder gemäß für verschiedene Strömungsrichtungen und Strömungsgeschwindigkeiten hinterlegten Werten für den Korrekturfaktor ermittelt wird und

e) Berechnen einer Konzentration der Partikel oder einer Aktivitätskonzentration in dem Aerosol auf der Grundlage des gemäß Schritt b) bestimmten Volumens, der gemäß Schritt c) bestimmten Anzahl oder Radioaktivität der Partikel und des gemäß Schritt d) bestimmten Korrekturfaktors.

Das Bestimmen der Anzahl oder der Radioaktivität der in dem Probensammler gesammelten Partikel gemäß Schritt c) kann dabei innerhalb der Vorrichtung erfolgen, beispielsweise wenn am oder im Probensammler ein Mechanismus zur Freisetzung der im Probensammler gesammelten Partikel in einen Gasstrom angeordnet ist und die freigesetzten Partikel dann gezählt werden oder deren Radioaktivität dann gemessen wird. Sie kann aber auch außerhalb der Vorrichtung erfolgen, beispielsweise indem in dem Probensammler enthaltene Sammelplatten aus dem Probensammler entfernt und dann, beispielsweise durch Messen der darauf gesammelten Radioaktivitätsmenge, ausgewertet werden. Dabei kann auch berücksichtigt werden, dass auf unterschiedlichen Sammelplatten des Kaskadenimpaktors jeweils Partikel unterschiedlicher Größe gesammelt werden.

Bei Schritt c) ist es auch möglich, die Arten der Partikel und deren jeweilige Anzahl oder die Art der Radioaktivität im Probensammler zu bestimmen. Dann kann bei Schritt d) der Korrekturfaktor jeweils für jede der bei Schritt c) ermittelten Art der Partikel oder Art der Radioaktivität bestimmt werden. Bei Schritt e) kann dann die Konzentration für jede der bei Schritt c) ermittelten Art der Partikel oder die Aktivitätskonzentration für jede der bei Schritt c) ermittelten Art der Radioaktivität in dem Aerosol auf der Grundlage des gemäß Schritt b) bestimmten Volumens, der gemäß Schritt c) bestimmten Anzahl der jeweiligen Art der Partikel oder Radioaktivität der jeweiligen Art der Radioaktivität und des gemäß Schritt d) bestimmten Korrekturfaktors berechnet werden.

Alle in dieser Beschreibung einschließlich der Ausführungsbeispiele angegebenen Merkmale werden als Merkmale erachtet, welche auf alle Formen der Erfindung angewandt werden können. Das bedeutet, dass beispielsweise Merkmale, welche für die erfindungsgemäße Vorrichtung angegeben sind auch auf das erfindungsgemäße Verfahren und/oder die erfindungsgemäße Verwendung angewandt werden können und umgekehrt.

Nachfolgend wird die Erfindung anhand von Ausführungsbeispielen näher erläutert. Es zeigen:

Fig. 1      Eine schematische Darstellung eines Teils einer erfindungsgemäßen Vorrichtung,

Fig. 2      eine schematische Darstellung von Details der erfindungsgemäßen Vorrichtung,

Fig. 3 a, b      eine schematische Darstellung weiterer Details der erfindungsgemäßen Vorrichtung,

Fig. 4      eine schematische Darstellung der Mehrlochsonde der erfindungsgemäßen Vorrichtung,

Fig. 5      eine schematische Darstellung des geöffneten Kaskadenimpaktors der erfindungsgemäßen Vorrichtung im Sammelbetrieb,

Fig. 6      eine schematische Darstellung des geöffneten Kaskadenimpaktors im Reinigungsbetrieb,

Fig. 7      eine schematische Darstellung des geöffneten Kaskadenimpaktors im Reinigungsbetrieb in Seitenansicht,

Fig. 8      eine schematische Darstellung einer Schwenkbewegung einer Sammelplatte des Kaskadenimpaktors,

Fig. 9      eine schematische Darstellung einer erfindungsgemäßen Vorrichtung mit einem Trägersystem zur horizontalen und vertikalen Bewegung in einem Fortluftkanal,

Fig. 10      ein Flussdiagramm eines beispielhaften erfindungsgemäßen Verfahrens,

Fig. 11      eine schematische Darstellung eines Versuchsaufbaus zur Kalibrierung eines Teils einer erfindungsgemäßen Vorrichtung und

Fig. 12      eine schematische Darstellung einer Probeentnahme bei angestellter Anströmung.

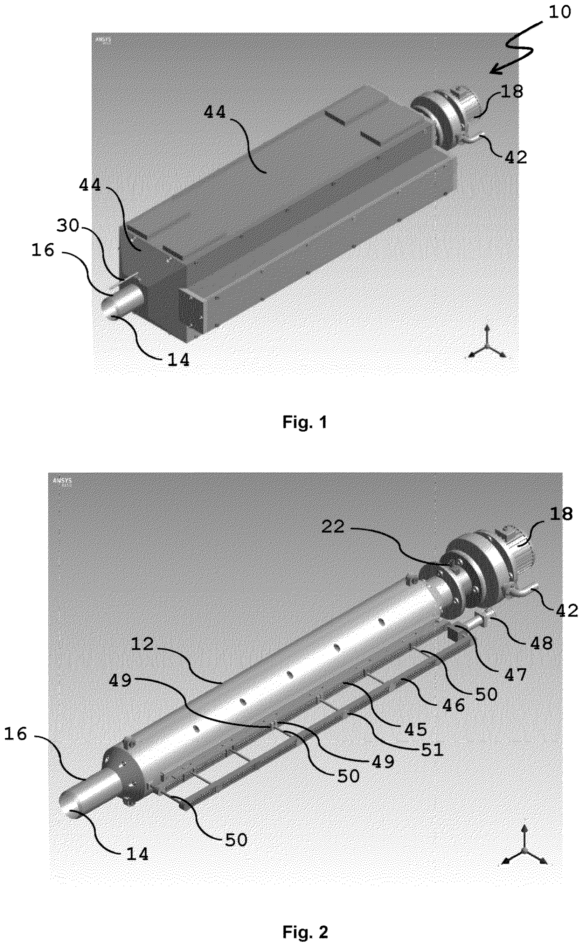

In Fig. 1 ist ein Teil 10 einer erfindungsgemäßen Vorrichtung zur isokinetischen Entnahme einer Probe aus einem strömenden Aerosol mit einer Abschirmung 44 dargestellt, die bei In situ-Messungen partikelgebundener Radioaktivität in Ab- bzw. Fortluftkanälen kerntechnischer Anlagen verwendet werden kann. Das Material der Abschirmung kann in Abhängigkeit des Strahlungsspektrums und der Strahlungsart des zu analysierenden Probenmaterials gewählt werden und beispielsweise Kunststoff, Stahl oder Blei sein. Die Entnahme der Probe aus dem Aerosol erfolgt mittels Einsaugen durch die Einlassöffnung 14. Das Aerosol kann z. B. Partikel enthalten, die gammastrahlende Radionuklide umfassen oder daraus bestehen. Das Ansaugstück 16 weist die Einlassöffnung 14 auf. Bei dem Ansaugstück 16 handelt es sich hier um ein kurzes Rohr aus poliertem Edelstahl mit einer glatten und kantenfreien Innenoberfläche zur Vermeidung eines Anhaftens von Partikeln an der Innenoberfläche. Das Ansaugstück 16 führt in den Probensammler 12. In unmittelbarer Umgebung der Einlassöffnung 14 ist eine Mehrlochsonde 30 angeordnet. Die von der Mehrlochsonde 30 erfasste Strömungsgeschwindigkeit des Aerosols wird als Strömungsgeschwindigkeit an der Einlassöffnung 14 erachtet. Die Einlassöffnung 14 ist gasleitend über das Ansaugstück 16 und einen von der Abschirmung 44 umgebenen und hier nicht sichtbaren Probensammler 12 mit einer Vakuumpumpe 18 und einem Auslassstutzen 42 verbunden. Der Probensammler 12 ist von einer hier auf Grund der Abschirmung 44 nicht sichtbaren Detektoreinheit 32 aus plattenförmigen Kunststoffszintillatoren umgeben. Die einzelnen Platten der Kunststoffszintillatoren sind über hier nicht dargestellte Lichtleiter in Form von Glasfaserflachkabeln jeweils mit ebenfalls nicht dargestellten Photomultipliern verbunden, deren Ausgangssignal jeweils proportional zur Menge radioaktiver Strahlung ist, die auf die jeweilige Kunststoffszintillator-Platte getroffen ist.

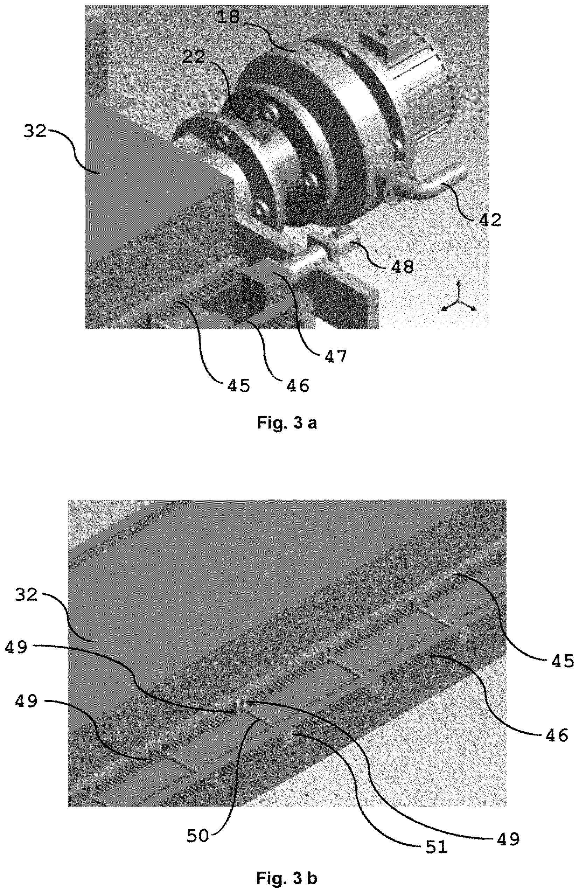

Fig. 2 zeigt den Probensammler 12 ohne Abschirmung 44 und ohne Detektoreinheit 32 und mit geöffnetem Antriebsmechanismus für den Probensammler 12, Vakuumpumpe 18 und Auslassstutzen 42. Fig. 3 a und Fig. 3 b zeigen Detailansichten des Teils 10 der erfindungsgemäßen Vorrichtung ohne Abschirmung 44 aber mit Detektoreinheit 32. Beim Betrieb des Teils 10 der erfindungsgemäßen Vorrichtung gelangen die über die Einlassöffnung 14 eingesaugten Aerosolpartikel über das Ansaugstück 16 in den Probensammler 12. Am vorderen Ende des Probensammlers 12 ist das gasleitende Ansaugstück 16 mit Einlassöffnung 12 angeschweißt. Am hinteren Ende des Probensammlers 12 ist der Durchflussmesser 22 montiert, welcher die Strömungsgeschwindigkeit im Strömungskanal des Teils 10 der Vorrichtung an der Stelle des Durchflussmessers 22 erfasst. Bei dem Durchflussmesser 22 handelt es sich um einen thermischen Durchflussmesser 22. In Strömungsrichtung hinter dem Durchflussmesser 22 ist die Vakuumpumpe 18 angeordnet. Der Probensammler 12 wird von der Detektoreinheit 32 umgeben. Die Detektoreinheit 32 ist aus plattenförmigen Kunststoffszintillatoren zusammengesetzt.

Die Regelung des Aerosoldurchflusses durch die Einlassöffnung 14 erfolgt über eine hier nicht dargestellte Regeleinheit in Abhängigkeit der von der Mehrlochsonde 30 und vom Durchflussmesser 22 jeweils erfassten und an die Regeleinheit übermittelten Strömungsgeschwindigkeiten. Die Regeleinheit steuert dabei die Vakuumpumpe 18 so, dass die Strömungsgeschwindigkeit, mit der das Aerosol durch die Einlassöffnung 14 gesaugt wird, mit der vom Strömungssensor erfassten Strömungsgeschwindigkeit des strömenden Aerosols im Bereich der Einlassöffnung 14 übereinstimmt. Dadurch wird eine im Hinblick auf die Strömungsgeschwindigkeit isokinetische Probeentnahme erreicht.

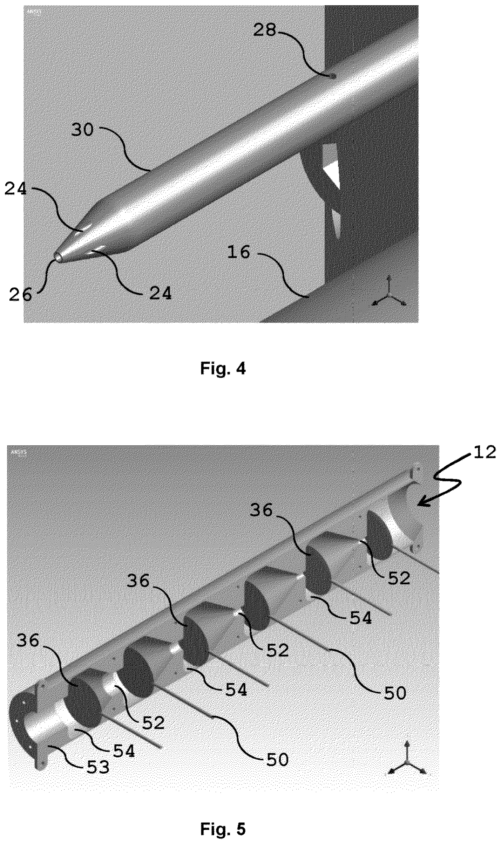

Durch die in Fig. 4 dargestellte und am vorderen Teil der Abschirmung 44 montierte Mehrlochsonde 30 werden sowohl die Strömungsgeschwindigkeit als auch die Strömungsrichtung des Aerosols in unmittelbarer Nähe der Einlassöffnung 14 erfasst. Die Mehrlochsonde 30 umfasst um die kegelförmige Spitze der Sonde herum angeordnete Sondenöffnungen zur Bestimmung eines Anströmwinkels 24, wobei in diesen Sondenöffnungen 24 jeweils ein dort herrschender Druck gemessen wird. Da die Verteilung der so gemessenen Drücke von der Strömungsrichtung abhängt, kann aus der Verteilung der Drücke um die Sondenspitze herum der Anströmwinkel bestimmt werden. Weiterhin umfasst die Mehrlochsonde 30 eine Sondenöffnung zur Messung des Staudrucks 26 und eine Sondenöffnung zur Messung des statischen Drucks 28 des strömenden Aerosols. Mittels des gemessenen Staudrucks und des gemessenen statischen Drucks kann mit Hilfe der Bernoulli-Gleichung der Betrag der Strömungsgeschwindigkeit bestimmt werden. Dadurch werden eine genaue Bestimmung der Strömungsgeschwindigkeit nach Betrag und Richtung direkt am Entnahmeort des Aerosols, eine isokinetische Probenahme bei direkter Anströmung von vorne und eine kontinuierliche Simulation einer isokinetische Probenahme bei schräger oder verwirbelter Anströmung ermöglicht. Durch die Berücksichtigung der Strömungsrichtung kann der Entnahmeort zur Probeentnahme mit dem Teil 10 der erfindungsgemäßen Vorrichtung im Gegensatz zu herkömmlichen Systemen deutlich flexibler innerhalb des Kanalquerschnitts eines Ab- oder Fortluftkanals gewählt werden. Dazu kann die erfasste Strömungsrichtung an eine Auswerteeinheit übermittelt und ein von der Strömungsrichtung abhängiger Korrekturfaktor bestimmt werden. Der Korrekturfaktor kann dann in eine Berechnung einer Partikelkonzentration oder Aktivitätskonzentration im Aerosol einbezogen werden. Die Ermittlung des Korrekturfaktors kann gemäß einer die Strömungsrichtung berücksichtigenden Formel oder gemäß einer hinterlegten Wertetabelle, Kennlinie oder, insbesondere zwei- oder dreidimensionalen, Matrix oder eines hinterlegten Kennfeldes oder gemäß in sonstiger Weise hinterlegter Werte für den Korrekturfaktor für verschiedene Strömungsrichtungen und Strömungsgeschwindigkeiten erfolgen.

Die Figuren 5 bis 7 zeigen schematische Darstellungen des geöffneten und hier als einstrahligen sechsstufigen Kaskadenimpaktor ausgeführten Probensammlers 12. Die Sammelplatten 36 des Kaskadenimpaktors sind jeweils in einer von mehreren Ausnehmungen 54 des Gehäuses 53 angeordnet. Die Ausnehmungen 54 sind jeweils über Düsen 52 miteinander verbundenen. Das Material der Sammelplatten 36 kann in Abhängigkeit der in dem zu entnehmenden Aerosol enthaltenen Partikel aus einem Metall oder einem Kunststoff gewählt werden. Das Metall sollte dabei so gewählt werden, dass sich dessen Oberfläche mit der Zeit nicht durch Korrosion verändert. Gut geeignete Metalle sind daher Edelstahl oder Aluminium. Um das Sammeln der Partikel zu verbessern, können die Sammelplatten 36 eine raue Oberfläche aufweisen.

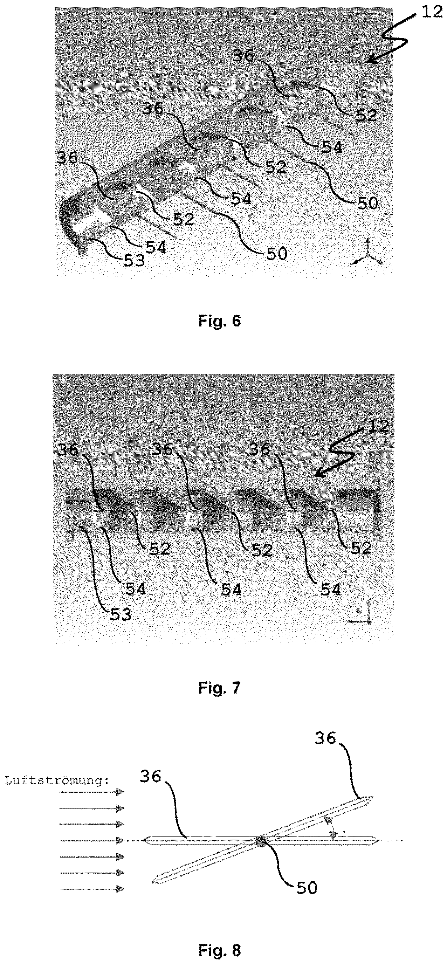

Die Sammelplatten 36 haben hier einen Durchmesser von 60 mm und eine Stärke von ca. 3 mm. Die Randbereiche der Sammelplatten 36 können so ausgeformt sein, dass sie zu einem im Vergleich zur Stärke der Sammelplatten 36 deutlich dünneren Rand zusammenlaufen. Dies ist in Fig. 8, die eine schwenkende Sammelplatte 36 in zwei Positionen im Querschnitt zeigt, gut zu erkennen. Dadurch kann ein besseres, d. h. verwirbelungsarmes, An- und Abströmen eines Gasstroms an den Sammelplatten 36 beim Schwenken der Sammelplatten 36 im Gasstrom und dadurch ein besseres Freisetzen daran anhaftender Partikel ermöglicht werden. Außerdem kann durch diese spezielle Ausgestaltung der Randbereiche die Gefahr einer sich auf das Freisetzen der Partikel negativ auswirkenden Ablösung der Strömung von den Sammelplatten 36 deutlich verringert werden.

Das Gehäuse 53 des Kaskadenimpaktors besteht hier aus Edelstahl und ist als Schraubkonstruktion zweiteilig ausgeführt. Die Ausnehmungen 54 in dem Gehäuse 53 sind über Düsen 52 mit immer kleiner werdendem Durchmesser miteinander verbunden. Der Düsendurchmesser beträgt hier 35 mm in einer ersten Stufe, 30 mm in einer zweiten Stufe, 15 mm in einer dritten Stufe, 10 mm in einer vierten Stufe, 7 mm in einer fünften Stufe und 6 mm in einer sechsten Stufe.

Im Sammelbetrieb werden die Sammelplatten 36 senkrecht zum Aerosolstrom angeordnet, um ein Umströmen der Sammelplatten 36 zu ermöglichen und einströmende Aerosolpartikel auf den Sammelplatten 36 abzuscheiden. Dabei findet das Impaktionsprinzip Anwendung, welches die Trägheit der Aerosolpartikel nutzt. Je größer bzw. schwerer die Partikel sind, desto weniger können sie auf Grund ihrer Trägheit einer starken Strömungsumlenkung folgen und deshalb auf den Sammelplatten 36 abgeschieden werden. Wenn das Aerosol mehrerer Stufen des Kaskadenimpaktors durchströmt, werden in jeder Stufe Partikel eines bestimmten Größenbereichs auf der jeweiligen Sammelplatte 36 abgeschieden.

Im vorliegenden Ausführungsbeispiel erfolgt beim Durchströmen des sechsstufigen Kaskadenimpaktors durch die von Stufe zu Stufe kleiner werdenden Durchmesser der Düsen 52 zur ersten Ausnehmung 54 und zwischen den Ausnehmungen 54 eine stufenweise Strömungsbeschleunigung. Bei einer Entnahmegeschwindigkeit von 5 m/s und einem mit dem Düsendurchmesser der ersten Stufe identischen Durchmesser der Einlassöffnung 14 von 35 mm wird die mittlere Strömungsgeschwindigkeit von 5 m/s in der ersten Düse 52 auf 165,3 m/s in der sechsten Düse 52 stufenweise erhöht. Dadurch werden in jeder nachfolgenden Stufe jeweils Partikel mit kleinerem Äquivalentdurchmesser als in der vorherigen Stufe abgeschieden. Der Kaskadenimpaktor des Ausführungsbeispiels ist so ausgelegt, dass darin Aerosolpartikel mit einem Äquivalentdurchmesser von 0,1 μm bis 20 μm abgeschieden werden.

Bei einer alternativen Ausgestaltung des Kaskadenimpaktors ist statt der zur letzten Stufe führenden Düse 52 eine Mehrzahl gleichartiger Düsen vorgesehen. Dadurch kann beim Einströmen in die letzten Stufe eine verringerte Strömungsbeschleunigung erreicht werden.

Während des Sammelns radioaktiver Partikel im Kaskadenimpaktor kann mittels der Detektoreinheit 32 die an den gesammelten Partikeln gebundene Radioaktivität in den einzelnen Stufen und deren Zunahme erfasst werden. Sobald die Geschwindigkeit der Zunahme bei ansonsten unverändertem Aerosol deutlich abnimmt, sollte die Sammlung der Partikel beendet werden, weil dann davon auszugehen ist, dass auf Grund des Bounce Off-Effekts eine verlässliche Partikelsammlung nicht mehr möglich ist. Mittels der Detektoreinheit 32 kann eine Zählrate bestimmt und mit Hilfe eines Kalibrierfaktors aus der Zählrate eine Aktivität in der Einheit Becquerels (Bq) ermittelt werden. Mittels des ebenfalls gemessenen Durchflusses kann daraus eine Aktivitätskonzentration (Bq/m$^3$) im Aerosol berechnet werden. Die Berechnung der Aktivitätskonzentration kann jeweils durch die hier nicht dargestellte Auswerteeinheit erfolgen.

Um den Kaskadenimpaktor für ein erneutes Sammeln von Partikeln vorzubereiten, kann in einen Reinigungsbetrieb zur Reinigung der Sammelplatten 36 übergegangen werden.

Der Wechsel zwischen Sammel- und Reinigungsbetrieb kann voll- oder teilautomatisiert erfolgen. Zur Reinigung ist im vorliegenden Ausführungsbeispiel eine Linearbewegung und eine Schwenkbewegung der Sammelplatten 36 erforderlich. Um diese Bewegungen zu realisieren, sind die Sammelplatten 36 jeweils auf einer Welle 50 gelagert. Die Wellen 50 sind jeweils über eine seitliche Öffnung im Probensammler 12 in einem Lagerungs- und Dichtungselement gelagert, welches sowohl eine Schwenkbewegung als auch eine Linearbewegung der Welle ermöglicht und dabei den Kaskadenimpaktor abdichtet.

Eine mögliche Konstruktion zur Ausführung der Linearbewegung und der Schwenkbewegung ist aus Fig. 2 und Fig. 3 b ersichtlich. Um die Linearbewegungen der Sammelplatten 36 bewirken zu können, sind am oben verlaufenden Teil des inneren Antriebsriemens 45 für jede der Wellen 50 jeweils zwei Mitnehmer 49 mit oder ohne Abstand voneinander fixiert. Einer der beiden Mitnehmer 49 ist dabei vor und der andere nach der Welle 50 angeordnet. Um die Linearbewegung zu bewirken wird der innere Antriebsriemen 45, angetrieben von dem Elektromotor 48 und gesteuert von der Getriebebox 47, bewegt. Dadurch vollziehen die Mitnehmer 49 eine Linearbewegung. Sind die Mitnehmer 49 einer Welle 50 mit Abstand zueinander angeordnet, ergibt sich aus dem Abstand ein Leerweg, den ein Mitnehmer 49 vollziehen kann, ehe er die Welle 50 linear verschiebt. Durch unterschiedlich gewählte Abstände zwischen den Mitnehmern 49 verschiedener Wellen 50 ist es möglich, mit einer einheitlichen Bewegung des inneren Antriebsriemens 45 unterschiedlich ausgeprägte Linearbewegungen der Wellen 50 und damit der Sammelplatten 36 zu bewirken. Dadurch kann einer unterschiedlichen Geometrie der Ausnehmungen 54 Rechnung getragen werden.

Die Schwenkbewegungen der Sammelplatten 36 werden durch den äußeren Antriebsriemen 46 bewirkt. Dieser wird ebenfalls von dem Elektromotor 48 angetrieben. Gesteuert wird der Antrieb des äußeren Antriebriemens 46 unabhängig von der Steuerung des inneren Antriebriemens 45 von der Getriebebox 47. Statt eines Antriebs des äußeren Antriebsriemens 46 und des inneren Antriebsriemens 45 mittels des Elektromotors 48 und der Getriebebox 47 kann auch jeder der Antriebsriemen 45, 46 jeweils von einem eigenen Motor angetrieben werden. Der äußere Antriebsriemen 46 weist eine Verzahnung auf, die jeweils mit an den Wellen 50 angeordneten Zahnrädern 51 in Eingriff steht. Ein Bewegen des äußeren Antriebriemens 46 bewirkt eine Schwenkbewegung des Zahnrads 51 und damit auch der Welle 50 und der Sammelplatte 36. Die Schwenkbewegungen der Sammelplatten 36 können gleichzeitig oder unabhängig von deren Linearbewegungen durchgeführt werden.

Um vom Sammelbetrieb in den Reinigungsbetrieb zu wechseln, werden die Sammelplatten 36 über den inneren Antriebsriemen 45 um einen für jede Impaktorstufe vordefinierten Abstand linear weg vom Düsenaustritt bewegt. Gleichzeitig erfolgt über den äußeren Antriebsriemen 46 eine Schwenkbewegung der Sammelplatten 36 um 90°. Sobald die Endpositionen der Sammelplatten 36 erreicht sind, kann über die Getriebebox 47 gesteuert eine weitere eingetaktete Schwenkbewegung der Sammelplatten 36 innerhalb eines Winkelbereich von 90° bis etwa 86° erfolgen. Dadurch wird eine direktere Anströmung der Partikel auf den Sammelplatten 36 und eine bessere Ablösung der Partikel von den Sammelplatten 36 bewirkt. Eine solche Schwenkbewegung einer der Sammelplatten 36 ist schematisch in Fig. 8 dargestellt. Um eine bessere Reinigungswirkung zu erreichen und/oder eine dafür erforderliche Zeit zu verkürzen, kann Luft oder ein sonstiges Gas mit höherer Strömungsgeschwindigkeit als das Aerosol im Sammelbetrieb durch den Kaskadenimpaktor geleitet werden.

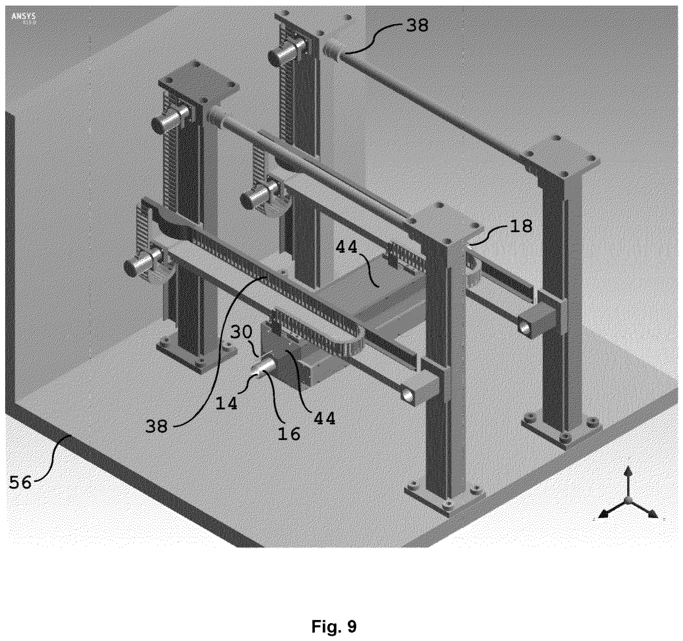

Fig. 9 zeigt eine besondere Ausgestaltung der erfindungsgemäßen Vorrichtung, die ein Trägersystem 38 umfasst, welches in einem Fortluftkanal 56 montiert ist. Das Trägersystem 38 umfasst eine innerhalb eines kartesischen Koordinatensystems verfahrbare Lagerung. Dabei wird der hier nicht sichtbare Probensammler 12, der von der hier ebenfalls nicht sichtbaren Detektoreinheit 32 und der Abschirmung 44 umgeben ist, mit dem Ansaugstück 16 mit der Einlassöffnung 14 von der Lagerung gehalten. Die Lagerung kann über das Trägersystem 38 horizontal und vertikal im Fortluftkanal 56 bewegt werden. Dadurch wird ein Abscannen von mehr als 60% des Kanalquerschnitts ermöglicht. Dadurch kann eine repräsentativere Probeentnahme erreicht werden. Die dabei realisierten Beweggeschwindigkeiten des Trägersystems 38 können zwischen 1 m/min und 2 m/min aber wegen der Berücksichtigung der mittels der Mehrlochsonde 30 erfassten Strömungsrichtung auch deutlich darüber liegen, ohne dass es zu einer Verfälschung der dabei ermittelten Partikelkonzentration im Aerosol kommt.

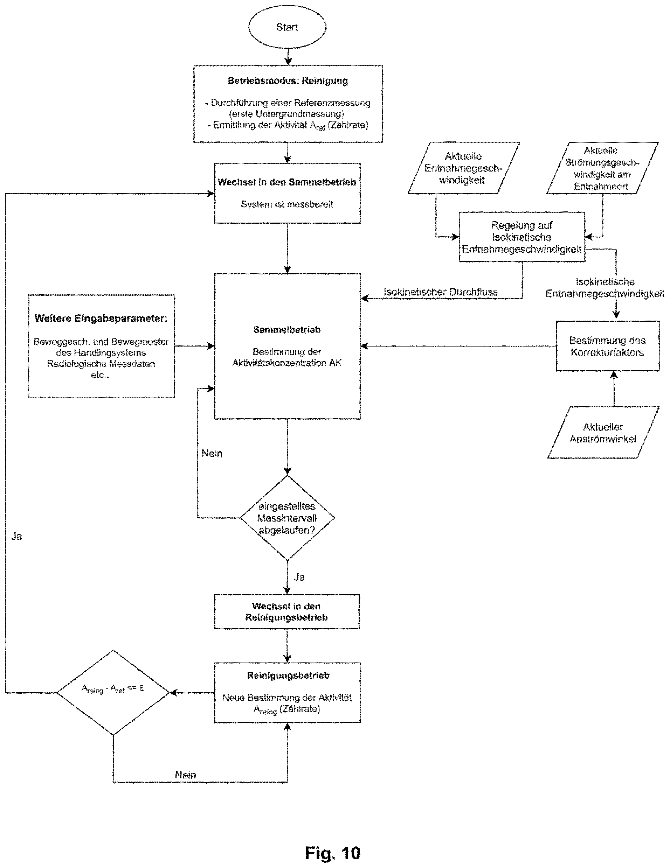

Fig. 10 zeigt ein beispielhaftes Flussdiagramm des erfindungsgemäßen Verfahrens. Bei der ersten Inbetriebnahme erfolgt im Reinigungsbetrieb eine erste Hintergrund- bzw. Untergrundmessung der Radioaktivität. Diese dient als Referenzmessung für den weiteren Betrieb. Nach Abschluss der Untergrundmessung wechselt das System in den Sammelbetrieb.

Für den Sammelbetrieb werden eine Beweggeschwindigkeit und ein Bewegmuster für die Lagerung des im Fortluftkanal 56 montierten Trägersystems 38 festgelegt. Weiterhin wird die Entnahmegeschwindigkeit für die Probe über die Regeleinheit und eine durch die Regeleinheit erfolgende Anpassung der Leistung der Vakuumpumpe 18 stets an die aktuelle Strömungsgeschwindigkeit im Fortluftkanal 56 am Entnahmeort angepasst, so dass die Probe durch die Einlassöffnung 14 im Hinblick auf die Strömungsgeschwindigkeit des Aerosols stets isokinetisch eingesaugt wird.

Zuvor wurde durch Kalibrierungen mit einem definierten Aerosol für unterschiedliche Entnahmegeschwindigkeiten und für unterschiedliche Anströmwinkel an der Einlassöffnung 14 jeweils ein Korrekturfaktor bestimmt. Daraus resultierende Werte wurden in Form eines Kennfeldes in einer Datenbank hinterlegt.

Aus dem in der Datenbank hinterlegten Kennfeld wird der Korrekturfaktor bestimmt, welcher dem mittels der Mehrlochsonde 30 ermittelten Anströmwinkel und der damit ermittelten Entnahmegeschwindigkeit bzw. Strömungsgeschwindigkeit des Aerosols im Fortluftkanal 56 am Entnahmeort bzw. der Einlassöffnung 14 während der Probennahme entspricht. Zusammen mit dem in der Zeit des Probesammelns durch den Probensammler 12 geströmten Volumens und den radiologischen Messdaten fließt der Korrekturfaktor in die Bestimmung einer aktuellen Aktivitätskonzentration, üblicherweise gemessen in Bq/m$^3$, ein. Nach Beendigung eines voreingestellten Messintervalls erfolgt ein Wechsel in den Reinigungsbetrieb. Der Reinigungsbetrieb erfolgt bis eine Differenz zwischen der gemessenen Aktivität $A_{reing}$ (Zählrate) und der Referenzaktivität des Untergrunds $A_{ref}$ (Zählrate) gleich einem definierten Toleranzwert $\varepsilon$ ist oder unterhalb dieses Toleranzwertes liegt. Nach Abschluss des Reinigungsbetriebs erfolgt ein Wechsel in den Sammelbetrieb und ein neuer Messvorgang wird gestartet.

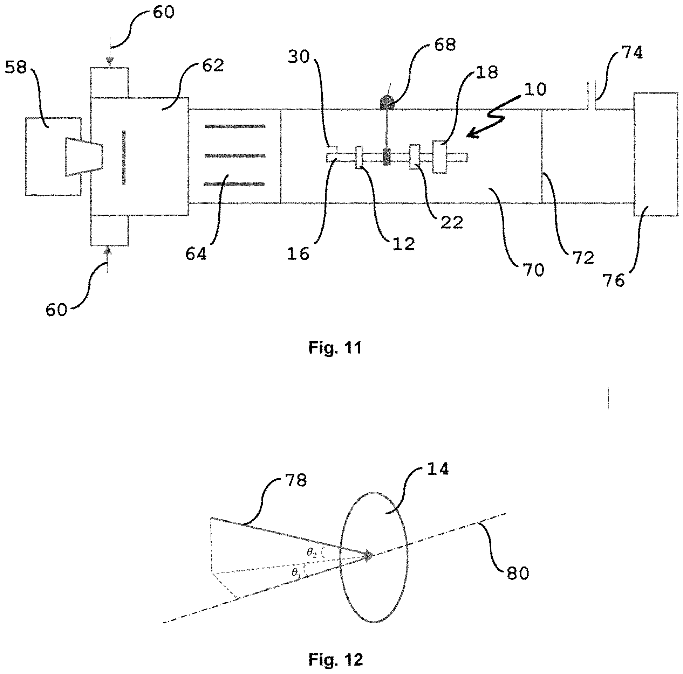

Zur Kalibrierung des Teils 10 der erfindungsgemäßen Vorrichtung kann ein Versuchsaufbau, wie er in Fig. 11 schematisch dargestellt ist, verwendet werden. Zur Herstellung eines Aerosols werden mit Hilfe eines Dispergiergeräts 58 Partikel bestimmter Größen generiert und in einer Mischkammer 62 mit Luft, die über Luftströme 60 zugeführt wird, vermischt. Über die Menge zugeführter Luft wird eine gewünschte Partikelkonzentration eingestellt. Angesaugt vom Ventilator 76 wird das so hergestellte Aerosol über einen Strömungsrichter 64, der eine wirbelfreie und parallele Strömung sicherstellt, einer Messstrecke 70 zugeführt. Mit Hilfe einer am Ende der Messstrecke 70 angeordneten Blende 72 wird der Aerosoldurchsatz durch die Messstrecke 70 grob geregelt und mit Hilfe eines zwischen Blende 72 und Ventilator 76 angeordneten Bypasses 74 mit hier nicht dargestelltem Ventil fein geregelt.

Der Teil 10 der erfindungsgemäßen Vorrichtung ist zur Kalibrierung innerhalb der Messstrecke 70 in etwa mittig an einer Winkeleinstellvorrichtung 68, die an einer Wand der Messstrecke 70 montiert ist, fixiert. Mit Hilfe der Winkeleinstellvorrichtung 68 können verschiedene Nickwinkel $\theta_1$ und Gierwinkel $\theta_2$ des Teils 10 der Vorrichtung im Verhältnis zur Strömungsrichtung realisiert werden. Der Teil 10 der erfindungsgemäßen Vorrichtung weist ein Ansaugstück 16, eine Mehrlochsonde 30, einen als Filter ausgebildeten Probensammler 12, einen Durchflussmesser 22 sowie eine Vakuumpumpe 18 auf. Der Filter ist ein Filter, welcher zur Sammlung der vom Dispergiergerät 58 generierten Partikel geeignet ist. Beispielsweise kann es sich dabei um einen auch als HEPA-Filter bezeichneten Schwebstofffilter handeln.

Zur Ermittlung von Partikelverlusten in Abhängigkeit der Neigung im Verhältnis zur Strömungsrichtung ist der gesamte Versuchsaufbau so anzuordnen, dass das Ansaugstück 16 entsprechend der späteren Einbaulage vor Ort angeordnet ist. Bei horizontaler Anordnung des Ansaugstücks 16 umfassen die Partikelverluste nämlich auch Sedimentationsverluste im Ansaugstück 16, während Sedimentationsverluste bei vertikaler Anordnung des Ansaugstücks 16 nicht auftreten.

Zur Grundeinstellung des Versuchsaufbaus wird mittels der Blende 72 und dem Ventil am Bypass 74 der Aerosoldurchsatz durch die Messstrecke 70 so eingestellt, dass die resultierende Strömungsgeschwindigkeit in der Messstrecke 70 einer Strömungsgeschwindigkeit im später vorgesehenen Einsatz entspricht. Mit Hilfe der Winkeleinstellvorrichtung 68 wird der Teil 10 der Vorrichtung so eingestellt, dass die Mehrlochsonde 30 einen Anströmwinkel von 0° detektiert. Dabei ist das Ansaugstück 16 genau in Strömungsrichtung ausgerichtet und die Strömung strömt direkt von vorne in die Einlassöffnung 14. Über die Drehzahl der Vakuumpumpe 18 wird eine isokinetische Entnahmegeschwindigkeit eingestellt.

Vor einer ersten Probeentnahme aus einem Aerosolstrom in der Messstrecke 70 wird das Gewicht $m_0$ des als Probensammler 12 dienenden Filters mit Hilfe einer Laborwaage bestimmt. In der Mischkammer 62 wird mit Hilfe des Dispergiergeräts 58 und der Luftströme 60 ein Aerosol mit einer bestimmten Konzentration an Partikeln erzeugt. Die vom Dispergiergerät 58 dispergierten Partikel weisen dabei üblicherweise einen Äquivalentdurchmesser von 1 μm oder größer auf, da Verluste kleinerer Partikel auf Grund ihrer geringen Trägheit vernachlässigbar gering sind.

Um bei einer Messung genügend Partikel auf dem Filter zu sammeln, erfolgen Probeentnahmen jeweils für eine Zeit im Bereich von 30 bis 60 Minuten. Zur Vermeidung einer Verfälschung der Versuchsergebnisse ist bei der Versuchsdurchführung durch Kontrolle der Messwerte des Durchflussmessers 22 darauf zu achten, dass es zu keinem starken Abfall des Durchflusses durch den Filter oder sogar zu einem Zusetzen des Filters kommt. Sollte dies dennoch eintreten, ist der Versuch mit einer geringeren Partikelkonzentration im Aerosol zu wiederholen. Nach der Probeentnahme wird das Gewicht des mit den Partikeln bestaubten Filters $m_g$ ermittelt. Das Gewicht $m_i$ der gesammelten Partikel auf dem Filter ergibt sich daraus wie folgt:

$$m_i = (m_g - m_0) \; [kg].$$

Die entsprechende Partikelkonzentration $C_i$ berechnet sich daraus wie folgt:

$$C_i = \frac{m_i}{V_i} \; [kg/m^3],$$

wobei $V_i$ [m³] das während der Dauer der Probeentnahme durch den Teil 10 der Vorrichtung geflossene Aerosolvolumen ist.

Die Differenz zwischen der Partikelkonzentration $C_0$ in der freien Strömung und $C_i$ ist durch den Partikelverlust bei der Entnahme verursacht. Der Korrekturfaktor entspricht dem Verhältnis $C_0/C_i$. Abhängig von der Messgenauigkeit sollte der Korrekturfaktor bei einer isokinetischen Probeentnahme bei $C_0/C_i \approx 1$ liegen.

Weitere Probeentnahmen werden wie die erste Probeentnahme mit dem Unterschied durchgeführt, dass zuvor mit Hilfe der Winkeleinstellvorrichtung 68 definierte Anströmwinkel eingestellt und mittels der Mehrlochsonde 30 detektiert und kontrolliert werden. Dabei werden im Allgemeinen ein Nickwinkel $\theta_1$ und ein Gierwinkel $\theta_2$ eingestellt. Schematisch ist die in Fig. 12 dargestellt. Dabei ist mit dem Bezugszeichen 14 die Einlassöffnung und mit dem Bezugszeichen 80 die Hauptströmungsrichtung im hier nicht dargestellten Ansaugstück 16 bezeichnet. Die eingestellte Anströmung 78 der Einlassöffnung 14 ist durch einen Pfeil dargestellt. Die Strömungsrichtung der Anströmung 78 entspricht der Hauptströmungsrichtung in der hier nicht dargestellten Messstrecke 70.

Für die Bestimmung der Korrekturfaktoren aufgrund angestellter Anströmung wird ein Gesamtwinkel Ø definiert. Dieser ergibt sich aus dem Nickwinkel $\theta_1$ und dem Gierwinkel $\theta_2$ wie folgt:

$$\emptyset = cos^{-1}(\cos\theta_1 \cos\theta_2)$$

Der Gesamtwinkel 0 wird jeweils als unabhängige Variable für einen Korrekturfaktor in einer Wertetabelle bzw. in einer Datenbank der Auswerteeinheit eingetragen. Der diesem Gesamtwinkel entsprechende Korrekturfaktor wird wie oben dargelegt als Verhältnis $C_0/C_i$ ermittelt und dann ebenfalls in die Wertetabelle bzw. Datenbank der Auswerteeinheit eingetragen. Tabelle 1 zeigt beispielhaft die Partikelverluste und die Korrekturfaktoren in Abhängigkeit vom Gesamtwinkel Ø der Anströmung für verschiedene Partikelgrößen bei einer Strömungsgeschwindigkeit von 5 m/s. Die Entnahmegeschwindigkeit entsprach dabei der Strömungsgeschwindigkeit.

**Tabelle 1**

| Gesamtanströmwinkel Ø | 4 µm | | 12 µm | | 37 µm | |
|---|---|---|---|---|---|---|
| | Prozentuale Transmission $c_i/c_0$ [%] | Korrekturfaktor $c_0/c_i$ [-] | Prozentuale Transmission $c_i/c_0$ [%] | Korrekturfaktor $c_0/c_i$ [-] | Prozentuale Transmission % [%] | Korrekturfaktor $c_0/c_i$ [-] |
| 15° | 97,20 | 1,03 | 96,81 | 1,03 | 95,22 | 1,05 |
| 30° | 91,44 | 1,09 | 92,80 | 1,08 | 86,11 | 1,16 |
| 45° | 89,81 | 1,11 | 81,10 | 1,23 | 76,24 | 1,31 |
| 60° | 84,40 | 1,18 | 72,82 | 1,37 | 64,32 | 1,55 |
| 75° | 78,11 | 1,28 | 61,09 | 1,64 | 51,44 | 1,94 |
| 90° | 69,21 | 1,45 | 51,21 | 1,95 | 34,12 | 2,93 |

Nach der derart erfolgten Kalibrierung und Ermittlung der ersten Werte für eine erste gewählte Strömungsgeschwindigkeit für die Wertetabelle wird der Vorgang für weitere Strömungsgeschwindigkeiten wiederholt und die Tabelle für diese Strömungsgeschwindigkeiten ergänzt. Anschließend wird der Teil 10 der Vorrichtung dann an seinem tatsächlichen Betriebsort eingebaut. Während des Betriebs erfolgt dann eine Probeentnahme, wobei auf der Grundlage der gemessenen Strömungsgeschwindigkeit über die Drehzahl der Vakuumpumpe 18 eine isokinetische Entnahmegeschwindigkeit eingestellt wird. In einer Software der Auswerteeinheit wird aus dem Nickwinkel $\theta_1$ und dem Gierwinkel $\theta_2$, der jeweils mittels der Mehrlochsonde 30 ermittelt wurde, ein Gesamtwinkel Ø berechnet. Aus der Datenbank wird dann der der Strömungsgeschwindigkeit und dem Gesamtwinkel Ø entsprechende Korrekturfaktor gewählt und zur Berechnung der Partikelkonzentration im Aerosolstrom am Betriebsort verwendet. Zwischenwerte werden dabei durch Interpolation ermittelt.

In den Korrekturfaktor fließen auch Partikelverluste ein, die davon abhängen, wie die Sammlung der Partikel erfolgt. Wenn das Ansaugstück 16 beispielsweise als langer Schlauch oder lange Rohrleitung ausgebildet ist, treten dabei auch Partikelverluste in dem Schlauch oder der Rohrleitung auf. Auch ein Probensammler 12, welcher - anders als ein HEPA-Filter - konstruktionsbedingt nicht sämtliche oder nahezu sämtliche Partikel aus dem hindurchströmenden Aerosol herausfiltert, wie beispielsweise ein Kaskadenimpaktor ohne nachgeschalteten Filter, führt zu Partikelverlusten. Ein solcher Probensammler 12 stellt einen Sonderfall dar, der im Folgenden detaillierter erläutert wird:
Erfolgt die Partikelsammlung mit Hilfe eines solchen Probensammlers 12, so ist nur für die Kalibrierung ein HEPA-Filter zwischen dem Probensammler 12 und der Vakuumpumpe anzuordnen, um sämtliche oder zumindest nahezu sämtliche Partikel aufzufangen, die bei der Kalibrierung nicht vom Probensammler 12 aufgefangen werden. Der HEPA-Filter stellt in diesem Fall also keinen Probensammler, sondern nur einen Backup Filter dar, mit dessen Hilfe der Korrekturfaktor bestimmt werden kann. Wichtig ist dabei der Anteil der Partikel, der im Kaskadenimpaktor (KI) abgefangen wird und der Messung zur Verfügung steht.

Folgende Parameter werden definiert:
$C_0$ [kg/m$^3$]: Partikelkonzentration in der freien Strömung.

$C_F$ [kg/m$^3$]: Partikelkonzentration, bestimmt wie oben beschrieben auf der Grundlage der Masse der Partikel, die auf dem nach dem Probensammler 12 angeordneten HEPA-Filter gesammelt wurden. Die Masse der Partikel wird wie oben beschrieben aus dem durch Wiegen des HEPA-Filters vor und nach dem Sammeln ermittelten Gewicht der Partikel ermittelt.

$C_{KI}$ [kg/m$^3$]: Partikelkonzentration, bestimmt auf der Grundlage der Masse der im Kaskadenimpaktor abgeschiedenen Partikel. Dabei handelt es sich um jene Partikel, die nicht bis zum HEPA-Filter gelangt sind.

Die entsprechende Partikelkonzentration $C_{KI}$ berechnet sich wie folgt:

$$C_{KI} = C_0 - C_F$$

Der Korrekturfaktur $C_0/C_{KI}$ kann dann gemäß folgender Formel bestimmt werden:

$$C_0/C_{KI} = C_0/(C_0 - C_F)$$

Bezugszeichenliste:

10  Teil der Vorrichtung
12  Probensammler
14  Einlassöffnung
16  Ansaugstück
18  Vakuumpumpe
22  Durchflussmesser
24  Sondenöffnung zur Bestimmung des Anströmwinkels
26  Sondenöffnung zur Messung der Strömungsgeschwindigkeit
28  Sondenöffnung zur Messung des statischen Drucks
30  Mehrlochsonde

| | |
|---|---|
| 32 | Detektoreinheit |
| 36 | Sammelplatte |
| 38 | Trägersystem |
| 42 | Auslassstutzen |
| 44 | Abschirmung |
| 45 | innerer Antriebsriemen |
| 46 | äußerer Antriebsriemen |
| 47 | Getriebebox |
| 48 | Elektromotor |
| 49 | Mitnehmer |
| 50 | Welle |
| 51 | Zahnrad |
| 52 | Düse |
| 53 | Gehäuse |
| 54 | Ausnehmung |
| 56 | Fortluftkanal |
| 58 | Dispergiergerät |
| 60 | Luftstrom |
| 62 | Mischkammer |
| 64 | Strömungsrichter |
| 68 | Winkeleinstellvorrichtung |
| 70 | Messstrecke |
| 72 | Blende |
| 74 | Bypass |
| 76 | Ventilator |
| 78 | Anströmung |
| 80 | Hauptströmungsrichtung im Ansaugstück |
| $\theta_1$ | Nickwinkel |
| $\theta_2$ | Gierwinkel |

**Patentansprüche**

1. Vorrichtung zur isokinetischen Entnahme einer Probe aus einem strömenden Aerosol, umfassend einen Probensammler (12) mit einer Einlassöffnung (14) oder mit einem Ansaugstück (16), welches eine Einlassöffnung (14) aufweist und die Einlassöffnung (14) gasleitend mit dem Probensammler (12) verbindet, eine mit dem Probensammler (12) und über den Probensammler (12) oder den Probensammler (12) und das Ansaugstück (16) mit der Einlassöffnung (14) gasleitend verbundene Vakuumpumpe (18), einen Strömungssensor zur Erfassung einer Strömungsgeschwindigkeit des strömenden Aerosols, einen in einem Strömungskanal innerhalb der Vorrichtung angeordneten Durchflussmesser (22) zur Erfassung der Strömungsgeschwindigkeit in der Vorrichtung und eine Regeleinheit zur isokinetischen Regelung eines Aerosoldurchflusses durch die Einlassöffnung (14) in Abhängigkeit der vom Strömungssensor und vom Durchflussmesser (22) jeweils erfassten und an die Regeleinheit übermittelten Strömungsgeschwindigkeit, **dadurch gekennzeichnet, dass** der Strömungssensor ein Strömungssensor zur Erfassung einer Strömungsgeschwindigkeit des strömenden Aerosols im Bereich der Einlassöffnung (14) ist und an oder in der Einlassöffnung (14) oder in einer Entfernung von höchstens 7,5 cm von einem Rand der Einlassöffnung (14) angeordnet ist, wobei eine Auswerteeinheit zur Berechnung einer Partikelkonzentration oder Aktivitätskonzentration im Aerosol auf der Grundlage

   - einer Zeit des Probesammelns im Probensammler (12),
   - einer erfassten Anzahl oder einer erfassten Radioaktivität von in dieser Zeit im Probensammler (12) gesammelten Partikeln und
   - der vom Strömungssensor erfassten und an die Auswerteeinheit übermittelten Strömungsgeschwindigkeit in Kombination mit einer Querschnittsfläche der Einlassöffnung (14) oder der vom Durchflussmesser (22) erfassten und an die Auswerteeinheit übermittelten Strömungsgeschwindigkeit in Kombination mit einer Querschnittsfläche des Strömungskanals an der Stelle des Durchflussmessers (22)

   vorgesehen ist, wobei mindestens eine Sonde zur Erfassung der Strömungsrichtung des Aerosols an oder in der Einlassöffnung (14) oder in einer Entfernung von höchstens 7,5 cm vom Rand der Einlassöffnung (14) angeordnet ist, um eine Simulation einer isokinetischen Entnahme der Probe bei schräger oder verwirbelter Anströmung der Einlassöffnung (14) durch das strömende Aerosol zu ermöglichen, wobei die Vorrichtung ein Trägersystem (38) mit einer innerhalb des strömenden Aerosols anzuordnenden verfahrbaren Lagerung umfasst, wobei der Probensammler (12) mit der Einlassöffnung (14) oder mit dem Ansaugstück (16) mit der Einlassöffnung (14) von der Lagerung gehalten wird.

2. Vorrichtung nach Anspruch 1, wobei die erfasste Strömungsrichtung an die Auswerteeinheit zur Bestimmung eines von der Strömungsrichtung und der Strömungsgeschwindigkeit abhängigen Korrekturfaktors für eine Korrektur der Berechnung der Partikelkonzentration oder Aktivitätskonzentration im Aerosol und zur Berücksichtigung des Korrekturfaktors bei der Berechnung der Partikelkonzentration oder Aktivitätskonzentration im Aerosol übermittelt wird, wobei der Korrekturfaktor ein Kehrwert eines Verlustfaktors ist und der Verlustfaktor angibt, welcher Anteil tatsächlich vorhandener Partikel im Aerosol im Probensammler (12) gesammelt und erfasst wird.

3. Vorrichtung nach Anspruch 2, wobei der Korrekturfaktor gemäß einer die Strömungsrichtung und die Strömungsgeschwindigkeit berücksichtigenden Formel oder gemäß hinterlegten Werten für den Korrekturfaktor oder den Verlustfaktor für verschiedene Strömungsrichtungen und Strömungsgeschwindigkeiten ermittelt wird.

4. Vorrichtung nach einem der vorhergehenden Ansprüche, wobei die Sonde den Strömungssensor umfasst und/oder als Mehrlochsonde (30) ausgebildet ist.

5. Vorrichtung nach einem der vorhergehenden Ansprüche, wobei am oder im Probensammler (12) ein Mechanismus zur Freisetzung der im Probensammler (12) gesammelten Partikel in einen Gasstrom angeordnet ist, wobei die Vorrichtung eine in Strömungsrichtung nach dem Probensammler (12) angeordnete Detektoreinheit (32) zur Bestimmung der Radioaktivität oder der Anzahl der Partikel und optional einer Art der im Probensammler (12) gesammelten und davon freigesetzten Radioaktivität oder Partikel umfasst oder wobei die Vorrichtung eine im Probensammler (12) oder auf der Außenseite des Probensammlers (12) angeordnete Detektoreinheit (32) zur Bestimmung der Radioaktivität oder der Anzahl der Partikel und optional einer Art der im Probensammler (12) gesammelten Radioaktivität oder Partikel während oder nach dem Sammeln aber vor dem Freisetzen der gesammelten Partikel umfasst, wobei die von der Detektoreinheit (32) bestimmte Radioaktivität oder Anzahl der Partikel an die Auswerteeinheit übermittelt wird, wobei die Auswerteeinheit die Aktivitätskonzentration oder Partikelkonzentration im Aerosol auf der Grundlage dieser übermittelten Radioaktivität oder Anzahl der Partikel unter Berücksichtigung des Korrekturfaktors berechnet.

6. Vorrichtung nach einem der vorhergehenden Ansprüche, wobei der Probensammler (12) ein Impaktor, insbesondere ein Kaskadenimpaktor, ist.

7. Vorrichtung nach Anspruch 5, wobei der Probensammler (12) ein Impaktor, insbesondere ein Kaskadenimpaktor, ist und der Mechanismus einen Mechanismus zum Schwenken oder zum Schwenken und linearen Verschieben mindestens einer im Probensammler (12) enthaltenen Sammelplatte (36) umfasst.

8. Vorrichtung nach einem der Ansprüche 5 bis 7, wobei die Partikel radioaktive Partikel sind und die Detektoreinheit (32) eine Detektoreinheit (32) zur Bestimmung der Radioaktivität und optional zur Bestimmung des den Partikeln jeweils Radioaktivität verleihenden Isotops ist.

9. Vorrichtung nach einer der vorhergehenden Ansprüche, wobei der Probensammler (12) im strömenden Aerosol angeordnet ist und/oder das Ansaugstück (16) ein gerades höchstens 100 cm langes Rohr oder ein gerader höchstens 100 cm langer Schlauch ist.

10. Vorrichtung nach einer der vorhergehenden Ansprüche, wobei der Durchflussmesser (22) in Strömungsrichtung innerhalb der Vorrichtung nach dem Probensammler (12) oder in dem Ansaugstück (16) angeordnet ist..

11. Vorrichtung nach einer der vorhergehenden Ansprüche, wobei das Trägersystem (38) ein Trägersystem (38) zum Verfahren der Lagerung innerhalb eines zweidimensionalen, insbesondere kartesischen, Koordinatensystems ist.

12. Vorrichtung nach einer der vorhergehenden Ansprüche, wobei zur isokinetischen Regelung des Aerosoldurchflusses die Leistung der Vakuumpumpe (18), ein Einlass durch ein in Strömungsrichtung nach dem Probensammler (12) und nach dem Durchflussmesser (22) aber vor der Vakuumpumpe (18) angeordnetes Nebenstromventil oder der Aerosoldurchfluss durch eine in Strömungsrichtung innerhalb der Vorrichtung nach dem Probensammler (12), insbesondere nach der Vakuumpumpe (18), angeordnete Durchlassöffnung für das Aerosol durch die Regeleinheit gesteuert wird.

**13.** Verwendung der Vorrichtung nach einem der vorhergehenden Ansprüche zur Entnahme einer Probe aus einem strömenden Aerosol und zur Bestimmung einer Partikelkonzentration oder Aktivitätskonzentration in dem strömenden Aerosol auf Grundlage einer Anzahl von in der Probe detektierten Partikeln oder auf Grundlage einer in der Probe detektierten Radioaktivität.

**14.** Verfahren zur isokinetischen Entnahme einer Probe aus einem strömenden Aerosol bei frontaler Anströmung einer für die Entnahme vorgesehenen Einlassöffnung (14) durch das strömende Aerosol und zur Simulation einer isokinetischen Entnahme der Probe aus dem Aerosol bei schräger oder verwirbelter Anströmung der Einlassöffnung (14) durch das strömende Aerosol und zur Bestimmung einer Partikelkonzentration oder Aktivitätskonzentration in dem strömenden Aerosol, wobei mittels einer in dem strömenden Aerosol angeordneten Vorrichtung nach einem der Ansprüche 1 bis 12 die folgenden Schritte ausgeführt werden:

a) Einsaugen der Probe durch die Einlassöffnung (14) der Vorrichtung mit der vom Strömungssensor der Vorrichtung erfassten Strömungsgeschwindigkeit des strömenden Aerosols und Hindurchleiten der Probe durch den Probensammler (12) der Vorrichtung für eine vorgegebene Zeit,
b) Bestimmen des in einer vorgegebenen Zeit durch die Vorrichtung geströmten Volumens,
c) Bestimmen der Anzahl oder der Radioaktivität der in dem Probensammler (12) gesammelten Partikel,
d) Bestimmen eines von der Strömungsgeschwindigkeit und der Strömungsrichtung des Aerosols abhängigen Korrekturfaktors für die vorgegebene Zeit, wobei der Korrekturfaktor gemäß einer die Strömungsgeschwindigkeit und die Strömungsrichtung berücksichtigenden Formel oder gemäß hinterlegten Werten für den Korrekturfaktor für verschiedene Strömungsrichtungen und Strömungsgeschwindigkeiten ermittelt wird und
e) Berechnen einer Konzentration der Partikel oder einer Aktivitätskonzentration in dem Aerosol auf der Grundlage des gemäß Schritt b) bestimmten Volumens, der gemäß Schritt c) bestimmten Anzahl oder Radioaktivität der Partikel und des gemäß Schritt d) bestimmten Korrekturfaktors.

## Claims

**1.** Device for the isokinetic extraction of a sample from a flowing aerosol, comprising a sample collector (12) with an inlet opening (14) or with an intake piece (16) which has an inlet opening (14) and connects the inlet opening (14) to the sample collector (12) in a gas-conducting manner, a vacuum pump (18) connected to the sample collector (12) and via the sample collector (12) or the sample collector (12) and the intake piece (16) to the inlet opening (14) in a gas-conducting manner, a flow sensor for detecting a flow velocity of the flowing aerosol, a flow meter (22) for detecting the flow velocity in the device which flow meter (22) is arranged in a flow channel within the device and a control unit for isokinetic control of an aerosol flow through the inlet opening (14) as a function of the flow velocity respectively detected by the flow sensor and by the flow meter (22) and transmitted to the control unit, **characterised in that in that** the flow sensor is a flow sensor for detecting a flow velocity of the flowing aerosol in the region of the inlet opening (14) and is arranged at or in the inlet opening (14) or at a distance of at most 7.5 cm from an edge of the inlet opening (14), wherein an evaluation unit for calculating a particle concentration or activity concentration in the aerosol on the basis of

- a period of sample collection in the sample collector (12),
- a detected number or a detected radioactivity of particles collected in the sample collector (12) during this period, and
- the flow velocity detected by the flow sensor and transmitted to the evaluation unit in combination with a cross-sectional area of the inlet opening (14) or the flow velocity detected by the flow meter (22) and transmitted to the evaluation unit in combination with a cross-sectional area of the flow channel at the location of the flow meter (22) is provided, wherein at least a probe for detecting the direction of flow of the aerosol is arranged at or in the inlet opening (14) or at a distance of at most 7.5 cm from the edge of the inlet opening (14) in order to enable a simulation of an isokinetic extraction of the sample in the case of an oblique or swirled flow towards the inlet opening (14) by the flowing aerosol, wherein the device comprises a carrier system (38) with a movable bearing to be arranged within the flowing aerosol, wherein the sample collector (12) with the inlet opening (14) or with the intake piece (16) with the inlet opening (14) is held by the bearing.

**2.** Device according to claim 1, wherein the detected direction of flow is transmitted to the evaluation unit for determining a correction factor dependent on the flow direction and the flow velocity for a correction of the calculation of the particle concentration or activity concentration in the aerosol and for taking the correction factor into account in the calculation of the particle concentration or activity concentration in the aerosol, wherein the correction factor is a reciprocal value of a loss factor and the loss factor indicates what proportion of particles actually present in the aerosol is collected and detected in the sample collector (12).

3. Device according to claim 2, wherein the correction factor is determined according to a formula taking into account the flow direction and the flow velocity or according to stored values for the correction factor or the loss factor for different flow directions and flow velocities.

4. Device according to one of the preceding claims, wherein the probe comprises the flow sensor and/or is designed as a multi-hole probe (30).

5. Apparatus according to any one of the preceding claims, wherein a mechanism for releasing the particles collected in the sample collector (12) into a gas stream is arranged on or in the sample collector (12), wherein the device comprises a detector unit (32) arranged downstream of the sample collector (12) which detector unit (32) is for determining the radioactivity or the number of particles and optionally a type of radioactivity or particles collected in the sample collector (12) and released therefrom, or wherein the device comprises a detector unit (32) arranged in the sample collector (12) or on the outside of the sample collector (12) which detector unit (32) is for determining the radioactivity or the number of particles and optionally a type of radioactivity or particles collected in the sample collector (12) during or after collection but before release of the collected particles, wherein the radioactivity or number of particles determined by the detector unit (32) is transmitted to the evaluation unit, wherein the evaluation unit calculates the activity concentration or particle concentration in the aerosol on the basis of this transmitted radioactivity or number of particles, taking into account the correction factor.

6. Device according to one of the preceding claims, wherein the sample collector (12) is an impactor, in particular a cascade impactor.

7. The device according to claim 5, wherein the sample collector (12) is an impactor, in particular a cascade impactor, and the mechanism comprises a mechanism for swivelling or for swivelling and linearly displacing at least one collection plate (36) contained in the sample collector (12).

8. The device according to any one of claims 5 to 7, wherein the particles are radioactive particles and the detector unit (32) is a detector unit (32) for determining the radioactivity and optionally for determining the isotope imparting radioactivity to the particles, respectively.

9. Device according to one of the preceding claims, wherein the sample collector (12) is arranged in the flowing aerosol and/or the suction piece (16) is a straight tube at most 100 cm long or a straight hose at most 100 cm long.

10. Device according to one of the preceding claims, wherein the flow meter (22) is arranged in the direction of flow within the device downstream of the sample collector (12) or in the intake piece (16).

11. Device according to one of the preceding claims, wherein the carrier system (38) is a carrier system (38) for moving the bearing within a two-dimensional, in particular Cartesian, coordinate system.

12. Device according to one of the preceding claims, wherein, for isokinetic control of the aerosol flow, the power of the vacuum pump (18), an inlet through a bypass valve arranged in the flow direction downstream of the sample collector (12) and downstream of the flow meter (22) but upstream of the vacuum pump (18), or the aerosol flow through an aperture for the aerosol arranged in the flow direction within the device downstream of the sample collector (12), in particular downstream of the vacuum pump (18), is controlled by the control unit.

13. Use of the device according to any one of the preceding claims for extracting a sample from a flowing aerosol and determining a particle concentration or activity concentration in the flowing aerosol based on a number of particles detected in the sample or based on a radioactivity detected in the sample.

14. Method for the isokinetic extraction of a sample from a flowing aerosol with a frontal approaching flow by the flowing aerosol to an inlet opening (14) provided for the extraction and for simulating an isokinetic extraction of the sample from the aerosol with an oblique or swirled approaching flow by the flowing aerosol to the inlet opening (14) and for determining a particle concentration or activity concentration in the flowing aerosol, wherein the following steps are carried out by means of a device according to one of claims 1 to 12 which device is arranged in the flowing aerosol:

a) drawing in the sample through the inlet opening (14) of the device at the flow velocity of the flowing aerosol detected by the flow sensor of the device and passing the sample through the sample collector (12) of the device for a predetermined time,

b) Determine the volume flowed through the device in a given time,

c) Determining the number or radioactivity of the particles collected in the sample collector (12),

d) determining a correction factor for the predetermined time which correction factor is dependent on the flow velocity and the flow direction of the aerosol, wherein the correction factor is determined according to a formula taking into account the flow velocity and the flow direction or according to stored values for the correction factor for different flow directions and flow velocities, and

e) calculating a concentration of the particles or an activity concentration in the aerosol based on the volume determined according to step b), the number or radioactivity of the particles determined according to step c) and the correction factor determined according to step d).


**Revendications**

1. Dispositif de prélèvement isocinétique d'un échantillon d'un aérosol circulant, comprenant un collecteur d'échantillon (12) avec une ouverture d'entrée (14) ou avec une pièce d'aspiration (16) qui présente une ouverture d'entrée (14) et connecte l'ouverture d'entrée (14) de manière conductrice de gaz au collecteur d'échantillon (12), une pompe à vide (18) connectée de manière conductrice de gaz au collecteur d'échantillon (12) et par le biais du collecteur d'échantillon (12) ou du collecteur d'échantillon (12) et de la pièce d'aspiration (16) à l'ouverture d'entrée (14), un capteur d'écoulement pour la détection d'une vitesse d'écoulement de l'aérosol circulant, un débitmètre (22) disposé dans un canal d'écoulement au sein du dispositif pour la détection de la vitesse d'écoulement dans le dispositif et un module de régulation pour la régulation isocinétique d'un débit d'aérosol à travers l'ouverture d'entrée (14) en fonction de la vitesse d'écoulement détectée à chaque fois par le capteur d'écoulement et par le débitmètre (22) et transmise au module de régulation, **caractérisé en ce que** le capteur d'écoulement est un capteur d'écoulement pour la détection d'une vitesse d'écoulement de l'aérosol circulant dans la région de l'ouverture d'entrée (14) et est disposé sur ou dans l'ouverture d'entrée (14) ou à une distance d'au plus 7,5 cm d'un bord de l'ouverture d'entrée (14), dans lequel un module d'évaluation est prévu pour le calcul d'une concentration particulaire ou concentration d'activité dans l'aérosol sur la base

- d'une période de la collecte d'échantillon dans le collecteur d'échantillon (12),
- d'un nombre détecté ou d'une radioactivité détectée de particules recueillies au cours de cette période dans le collecteur d'échantillon (12) et
- de la vitesse d'écoulement détectée par le capteur d'écoulement et transmise au module d'évaluation en combinaison avec une surface transversale de l'ouverture d'entrée (14) ou de la vitesse d'écoulement détectée par le débitmètre (22) et transmise au module d'évaluation en combinaison avec une surface transversale du canal d'écoulement à la place du débitmètre (22),

dans lequel au moins une sonde est disposée sur ou dans l'ouverture d'entrée (14) ou à une distance d'au plus 7,5 cm du bord de l'ouverture d'entrée (14) pour la détection de la direction d'écoulement de l'aérosol pour permettre une simulation d'un prélèvement isocinétique de l'échantillon en cas d'afflux en biais ou tourbillonné de l'ouverture d'entrée (14) par l'aérosol circulant, dans lequel le dispositif comprend un système de support (38) avec un palier pouvant être déplacé, à disposer au sein de l'aérosol circulant, dans lequel le collecteur d'échantillon (12) avec l'ouverture d'entrée (14) ou avec la pièce d'aspiration (16) avec l'ouverture d'entrée (14) est maintenu par le palier.

2. Dispositif selon la revendication 1, dans lequel la direction d'écoulement détectée est transmise au module d'évaluation pour la détermination d'un facteur de correction dépendant de la direction d'écoulement et de la vitesse d'écoulement pour une correction du calcul de la concentration particulaire ou concentration d'activité dans l'aérosol et pour la prise en compte du facteur de correction lors du calcul de la concentration particulaire ou concentration d'activité dans l'aérosol, dans lequel le facteur de correction est une valeur inverse d'un facteur de perte et le facteur de perte indique quelle proportion de particules effectivement présentes dans l'aérosol est recueillie et détectée dans le collecteur d'échantillon (12).

3. Dispositif selon la revendication 2, dans lequel le facteur de correction est déterminé selon une formule prenant en compte la direction d'écoulement et la vitesse d'écoulement ou selon des valeurs consignées pour le facteur de correction ou le facteur de perte pour différentes directions d'écoulement et vitesses d'écoulement.

4. Dispositif selon une des revendications précédentes, dans lequel la sonde comprend le capteur d'écoulement et/ou est réalisée en tant que sonde multi-trous (30).

5. Dispositif selon une des revendications précédentes, dans lequel un mécanisme pour la libération des particules recueillies dans le collecteur d'échantillon (12) dans un courant gazeux est disposé sur ou dans le collecteur d'échantillon (12), dans lequel le dispositif comprend un module de détecteur (32) disposé après le collecteur d'échantillon (12) dans la direction d'écoulement pour la détermination de la radioactivité ou du nombre des particules et en option d'un type de la radioactivité ou des particules recueillie(s) dans le collecteur d'échantillon (12) et libérée(s) de celui-ci ou dans lequel le dispositif comprend un module de détecteur (32) disposé dans le collecteur d'échantillon (12) ou sur le côté externe du collecteur d'échantillon (12) pour la détermination de la radioactivité ou du nombre des particules et en option d'un type de la radioactivité ou des particules recueillie(s) dans le collecteur d'échantillon (12) pendant ou après la collecte mais avant la libération des particules recueillies, dans lequel la radioactivité ou le nombre des particules déterminé(e) par le module de détecteur (32) est transmis(e) au module d'évaluation, dans lequel le module d'évaluation calcule la concentration d'activité ou concentration particulaire dans l'aérosol sur la base de cette radioactivité ou de ce nombre des particules transmis(e) en prenant en compte le facteur de correction.

6. Dispositif selon une des revendications précédentes, dans lequel le collecteur d'échantillon (12) est un impacteur, notamment un impacteur en cascade.

7. Dispositif selon la revendication 5, dans lequel le collecteur d'échantillon (12) est un impacteur, notamment un impacteur en cascade, et le mécanisme comprend un mécanisme pour le pivotement ou pour le pivotement et le coulissement linéaire d'au moins une plaque collectrice (36) contenue dans le collecteur d'échantillon (12).

8. Dispositif selon une des revendications 5 à 7, dans lequel les particules sont des particules radioactives et le module de détecteur (32) est un module de détecteur (32) pour la détermination de la radioactivité et en option pour la détermination de l'isotope conférant à chaque fois de la radioactivité aux particules.

9. Dispositif selon une des revendications précédentes, dans lequel le collecteur d'échantillon (12) est disposé dans l'aérosol circulant et/ou la pièce d'aspiration (16) est un tube droit d'au plus 100 cm de long ou un tuyau droit d'au plus 100 cm de long.

10. Dispositif selon une des revendications précédentes, dans lequel le débitmètre (22) est disposé dans la direction d'écoulement au sein du dispositif après le collecteur d'échantillon (12) ou dans la pièce d'aspiration (16).

11. Dispositif selon une des revendications précédentes, dans lequel le système de support (38) est un système de support (38) pour le déplacement du palier au sein d'un système de coordonnées bidimensionnel, notamment cartésien.

12. Dispositif selon une des revendications précédentes, dans lequel la puissance de la pompe à vide (18), une entrée à travers une vanne de flux secondaire disposée dans la direction d'écoulement après le collecteur d'échantillon (12) et après le débitmètre (22) mais avant la pompe à vide (18) ou le débit d'aérosol à travers une ouverture de passage pour l'aérosol disposée dans la direction d'écoulement au sein du dispositif après le collecteur d'échantillon (12), notamment après la pompe à vide (18), est commandé(e) par le module de régulation pour la régulation isocinétique du débit d'aérosol.

13. Utilisation du dispositif selon une des revendications précédentes pour le prélèvement d'un échantillon d'un aérosol circulant et pour la détermination d'une concentration particulaire ou concentration d'activité dans l'aérosol circulant sur la base d'un nombre de particules détectées dans l'échantillon ou sur la base d'une radioactivité détectée dans l'échantillon.

14. Procédé de prélèvement isocinétique d'un échantillon d'un aérosol circulant en cas d'afflux frontal d'une ouverture d'entrée (14) prévue pour le prélèvement par l'aérosol circulant et pour la simulation d'un prélèvement isocinétique de l'échantillon de l'aérosol en cas d'afflux en biais ou tourbillonné de l'ouverture d'entrée (14) par l'aérosol circulant et pour la détermination d'une concentration particulaire ou concentration d'activité dans l'aérosol circulant, dans lequel les étapes suivantes sont réalisées au moyen d'un dispositif selon une des revendications 1 à 12 disposé dans l'aérosol circulant:

a) aspiration de l'échantillon à travers l'ouverture d'entrée (14) du dispositif avec la vitesse d'écoulement détectée par le capteur d'écoulement du dispositif de l'aérosol circulant et passage de l'échantillon à travers le collecteur d'échantillon (12) du dispositif pendant une période prédéfinie,

b) détermination du volume ayant circulé à travers le dispositif dans une période prédéfinie,

c) détermination du nombre ou de la radioactivité des particules recueillies dans le collecteur d'échantillon (12),

d) détermination d'un facteur de correction dépendant de la vitesse d'écoulement et de la direction d'écoulement de l'aérosol pour la période prédéfinie, dans lequel le facteur de correction est déterminé selon une formule prenant en compte la vitesse d'écoulement et la direction d'écoulement ou selon des valeurs consignées pour le facteur de correction pour différentes directions d'écoulement et vitesses d'écoulement et

e) calcul d'une concentration des particules ou d'une concentration d'activité dans l'aérosol sur la base du volume déterminé selon l'étape b), du nombre ou de la radioactivité des particules déterminé(e) selon l'étape c) et du facteur de correction déterminé selon l'étape d).

Fig. 1

Fig. 2

**Fig. 3 a**

**Fig. 3 b**

**Fig. 4**

**Fig. 5**

**Fig. 6**

**Fig. 7**

**Fig. 8**

Fig. 9

Start

**Betriebsmodus: Reinigung**

- Durchführung einer Referenzmessung
(erste Untergrundmessung)
- Ermittlung der Aktivität $A_{ref}$ (Zählrate)

**Wechsel in den Sammelbetrieb**

System ist messbereit

Aktuelle
Entnahmegeschwindigkeit

Aktuelle
Strömungsgeschwindigkeit am
Entnahmeort

Regelung auf
Isokinetische
Entnahmegeschwindigkeit

Isokinetischer Durchfluss

Isokinetische
Entnahmegeschwindigkeit

**Weitere Eingabeparameter:**

Beweggesch. und Bewegmuster
des Handlingsystems
Radiologische Messdaten
etc...

**Sammelbetrieb**

Bestimmung der
Aktivitätskonzentration AK

Bestimmung des
Korrekturfaktors

Aktueller
Anströmwinkel

Nein

eingestelltes
Messintervall
abgelaufen?

Ja

Ja

**Wechsel in den
Reinigungsbetrieb**

**Reinigungsbetrieb**

Neue Bestimmung der Aktivität
$A_{reing}$ (Zählrate)

$A_{reing} - A_{ref} <= \varepsilon$

Nein

**Fig. 10**

Fig. 11

Fig. 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3318339 A1
- US 4159635 A
- US 000000001757 H1
- EP 0561557 B1
- US 2982131 A

**In der Beschreibung aufgeführte Nicht-Patentliteratur**

- **DURHAM M.** Isokinetic sampling of aerosols from tangential flow streams. *Dissertation an der University of Florida,* 1978